# EUROPEAN PATENT APPLICATION

(11) **EP 3 113 121 A1**
(43) Date of publication of application: **04.01.2017**
(21) Application number: 16177305.6
(22) Date of filing: 30.06.2016
(51) Int. Cl.: G07C 9/00, H04W 12/06

(54) **METHOD FOR PERFORMING AUTHENTICATION AND ELECTRONIC DEVICE THEREOF**

(30) Priority: 30.06.2015 KR 20150092979
(71) Applicant: Samsung Electronics Co., Ltd., Gyeonggi-do 16677 (KR)
(72) Inventor: Chang, Moon-Su, Suwon-si 16677 (KR); Lee, Yang-Soo, Suwon-si 16677 (KR); Lee, Joo-Yeon, Suwon-si 16677 (KR); Yeom, Dong-Hyun, Suwon-si 16677 (KR)
(74) Representative: Nederlandsch Octrooibureau

(57) **Abstract**

A method and an apparatus for performing authentication are provided. The method includes performing, by a first authentication unit in a first electronic device, authentication with respect to a second electronic device that requests authentication through a first communication mode and when the second electronic device is authenticated, transmitting first information used for controlling the first electronic device to the second electronic device through the first communication mode and transferring second information indicating that the second electronic device is authenticated to a second authentication unit in the first electronic device.

## Description

### TECHNICAL FIELD

The present disclosure relates to a method for performing authentic ation and an electronic device thereof. More particularly, the present disclosure r elates to a method for performing authentication between electronic devices that are capable of communicating through a plurality of communication modes.

### BACKGROUND

A method for controlling the authority to use a vehicle has been ch anged from a classical method that uses a key to a remote control method that us es a radio frequency (RF) key fob or similar device. A smart key method that co ntrols a vehicle using a portable electronic device (such as a smart phone, tablet personal computer (PC), and the like) without using a key is also widely used as a desirable method of controlling the authority to use a vehicle.

Further, in association with a method of controlling a vehicle, a we arable device may replace the smart key, or a method of controlling a vehicle usi ng a mobile device and a network may be introduced irrespective of distance, un like the existing key system.

When an electronic device (such as a smart phone, tablet PC, wear able device, and the like), controls a vehicle, a process in which the vehicle auth enticates the electronic device is required. According to the related art, an indepe ndent authentication procedure exists for each communication mode that is perfo rmable between the electronic device and the vehicle, and the authentication pro cedure for each communication mode does not typically interwork with one anot her. Thus, an authentication procedure needs to be performed for each communi cation mode, which is a significant drawback associated with the related art. Als o, when an authentication result is simply shared so as to connect the authenticat ion procedure for each communication mode, the level of security may deteriorat e.

The above information is presented as background information onl y, and to assist with an understanding of the present disclosure. No determinatio n has been made, and no assertion is made, as to whether any of the above might be applicable as prior art with regard to the present disclosure.

### SUMMARY

Aspects of the present disclosure are provided to address at least th e above-mentioned problems and/or disadvantages and to provide at least the ad vantages described below. Accordingly, an aspect of the present disclosure is to provide electronic devices which can perform authentication between the electro nic devices that are capable of communicating through a plurality of communica tion modes.

In accordance with an aspect of the present disclosure, a method fo r performing authentication in a first electronic device is provided. The method i ncludes performing, by a first authentication unit in the first electronic device, au thentication with respect to a second electronic device that requests authenticatio n through a first communication mode, and when the second electronic device is authenticated, transmitting first information used for controlling the first electron ic device to the second electronic device through the first communication mode and transferring second information indicating that the second electronic device i s authenticated to a second authentication unit in the first electronic device, wher ein the second authentication unit performs authentication through a second com munication mode.

In accordance with another aspect of the present disclosure, a first electronic device that performs authentication is provided. The first electronic de vice includes a first authentication unit that performs authentication with respect to a second electronic device that requests authentication through a first commun ication mode and a second authentication unit that performs authentication throu gh a second communication mode, wherein the first authentication unit transmits first information used for controlling the first electronic device to the second ele ctronic device through the first communication mode when the second electronic device is authenticated, and transfers second information indicating that the sec ond electronic device is authenticated to the second authentication unit.

In accordance with another aspect of the present disclosure, a meth od for performing authentication in a second electronic device is provided. The method includes requesting, by a first authentication unit, authentication with res pect to the second electronic device through a first communication mode, receivi ng first information used for controlling a first electronic device from the first el ectronic device through the first communication mode when the second electroni c device is authenticated, and transferring second information indicating that the second electronic device is authenticated to a second authentication unit in the se cond electronic device, wherein the second authentication unit requests authentic ation through a second communication mode.

In accordance with another aspect of the present disclosure, a seco nd electronic device that performs authentication is provided. The second electro nic device includes a first authentication unit that requests authentication with re spect to the second electronic device through a first communication mode, and a second authentication unit that requests authentication through a second commu nication mode, wherein the first authentication unit receives first information use d for controlling the first electronic device from the first electronic device throug h the first communication mode when the second electronic device is authenticat ed, and transfers second information indicating that the second electronic device is authenticated to the second authentication unit.

According to various embodiments of the present disclosure, an ele ctronic device transfers the result of authentication through a first communicatio n mode to a second authentication unit that performs authentication through a se cond communication mode. Thus, an independent authentication procedure for e ach communication mode that is used for performing connection with a vehicle may be linked with one another.

Through the above embodiments, the electronic device may not be required to perform a separate authentication procedure through the second com munication mode, although the electronic device performs communication with t he vehicle through the second communication mode, which is different from the first communication mode through which the authentication is performed. Also, the information indicating the authentication result through the first communicati on mode may not be checked without separate authority, so that a security proble m may be prevented and avoid a level of security that deteriorates.

Other aspects, advantages, and salient features of the disclosure wi 11 become apparent to those skilled in the art from the following detailed descript ion, which, taken in conjunction with the annexed drawings, discloses various e mbodiments of the present disclosure.

### BRIEF DESCRIPTION OF THE DRAWINGS

The above and other aspects, features, and advantages of certain e mbodiments of the present disclosure will be more apparent from the following description taken in conjunction with the accompanying drawings, in which:
FIG. 1 is a block diagram of a first electronic device and a second electronic device according to various embodiments of the present disclosure;
FIG. 2 is a block diagram of a program module according to variou s embodiments of the present disclosure;
FIG. 3 illustrates a communication mode that is available based on a distance between a first electronic device and a second electronic device accor ding to various embodiments of the present disclosure;
FIG. 4 illustrates various authentication methods performed betwe en a block diagram of a first electronic device and a block diagram of a second e lectronic device according to various embodiments of the present disclosure;
FIG. 5 is a flowchart illustrating an authentication method perform ed by a first electronic device according to various embodiments of the present d isclosure;
FIG. 6 is a flowchart illustrating a method for a first electronic dev ice to process a control signal received through a second communication mode a ccording to various embodiments of the present disclosure;
FIG. 7 is a flowchart illustrating an authentication method perform ed by a second electronic device according to various embodiments of the presen t disclosure;
FIG. 8 is a flowchart illustrating an authentication method perform ed between a first electronic device and a second electronic device according to various embodiments of the present disclosure;
FIG. 9 is a flowchart illustrating an authentication method perform ed between a first electronic device and a second electronic device according to various embodiments of the present disclosure;
FIG. 10 is a flowchart illustrating an authentication method perfor med among a first electronic device, a second electronic device, and a third elect ronic device according to various embodiments of the present disclosure;
FIG. 11 is a flowchart illustrating a method for a first electronic de vice to process a plurality of control signals according to various embodiments o f the present disclosure;
FIG. 12 is a diagram illustrating a method for a first electronic devi ce to process a plurality of control signals based on a distance according to vario us embodiments of the present disclosure;
FIG. 13 is a diagram illustrating a method for a first electronic devi ce to process a plurality of control signals based on a security level according to various embodiments of the present disclosure;
FIG. 14 is a diagram illustrating a method for a first electronic devi ce to process a plurality of control signals based on a communication mode acco rding to various embodiments of the present disclosure;
FIG. 15 is a diagram illustrating a method for a first electronic devi ce to process a plurality of control signals based on an authentication method acc ording to various embodiments of the present disclosure; and
FIG. 16 is a block diagram of an electronic device according to var ious embodiments of the present disclosure.

Throughout the drawings, like reference numerals will be understo od to refer to like parts, components, and structures.

### DETAILED DESCRIPTION

The following description with reference to the accompanying dra wings is provided to assist in a comprehensive understanding of various embodi ments of the present disclosure as defined by the claims and their equivalents. It includes various specific details to assist in that understanding, but these are to b e regarded as merely exemplary. Accordingly, those of ordinary skill in the art w ill recognize that various changes and modifications of the various embodiments described herein can be made without departing from the spirit and scope of the present disclosure. In addition, descriptions of well-known functions and constru ctions may be omitted for clarity and conciseness.

The terms and words used in the following description and claims are not limited to the bibliographical meanings, but are merely used to enable a c lear and consistent understanding of the present disclosure. Accordingly, it shoul d be apparent to those skilled in the art that the following description of various embodiments of the present disclosure is provided for illustration purpose only, and not for the purpose of limiting the present disclosure as defined by the appen ded claims and their equivalents.

It is to be understood that the singular forms "a", "an", and "the", i nclude plural referents unless the context clearly dictates otherwise. Thus, for ex ample, reference to "a component surface" includes reference to one or more of s uch surfaces.

As used herein, the expression "have", "may have", "include", or " may include" refers to the existence of a corresponding feature (e.g., numeral, fu nction, operation, or constituent element such as component), and does not exclu de one or more additional features.

In the present disclosure, the expression "A or B", "at least one of A or/and B", or "one or more of A or/and B" may include all possible combinati ons of the items listed. For example, the expression "A or B", "at least one of A and B", or "at least one of A or B" refers to all of (1) including at least one A, (2 ) including at least one B, or (3) including all of at least one A and at least one B.

The expression "a first", "a second", "the first", or "the second" us ed in various embodiments of the present disclosure may modify various compo nents regardless of the order and/or the importance, but does not limit the corres ponding components. For example, a first user device and a second user device i ndicate different user devices, but both of them are user devices. For further exa mple, a first element may be termed a second element, and similarly, a second el ement may be termed a first element without departing from the scope of the pre sent disclosure.

It should be understood that when an element (e.g., first element) i s referred to as being (operatively or communicatively) "connected," or "coupled ," to another element (e.g., second element), it may be directly connected or cou pled directly to the other element or any other element (e.g., third element) may be interposed between them. In contrast, it may be understood that when an elem ent (e.g., first element) is referred to as being "directly connected," or "directly c oupled" to another element (e.g., second element), there are no elements (e.g., th ird element) interposed between them.

The expression "configured to" used in the present disclosure may be exchanged with, for example, "suitable for", "having the capacity to", "design ed to", "adapted to", "made to", or "capable of" according to the situation. The t erm "configured to" may not necessarily imply "specifically designed to" in a ha rdware implementation. Alternatively, in some situations, the expression "device configured to" may mean that the device, together with other devices or compon ents, "is able to". For example, the phrase "processor adapted (or configured) to perform A, B, and C" may mean a dedicated processor (e.g. embedded processor ) only for performing the corresponding operations or a generic-purpose process or (e.g., central processing unit (CPU) or application processor (AP)) that can pe rform the corresponding operations by executing one or more software programs stored in a memory device.

Unless defined otherwise, all terms used herein, including technica 1 and scientific terms, have the same meaning as those commonly understood by a person skilled in the art to which the present disclosure pertains. Such terms as those defined in a generally used dictionary may be interpreted to have meanings equal to the contextual meanings in the relevant field of art, and are not to be int erpreted to have ideal or excessively formal meanings unless clearly defined in t he present disclosure. In some cases, even the terms defined in the present disclo sure should not be interpreted to exclude embodiments of the present disclosure.

An electronic device according to various embodiments of the pres ent disclosure may include at least one of, for example, a smart phone, tablet per sonal computer (PC), mobile phone, video phone, electronic book reader (e-book reader), desktop PC, laptop PC, netbook computer, workstation, server, personal digital assistant (PDA), portable multimedia player (PMP), Moving Picture Exp erts Group (MPEG-1 or MPEG-2) audio layer-3 (MP3) player, mobile medical d evice, camera, and wearable device. According to various embodiments, the wea rable device may include at least one of an accessory type (e.g., a watch, ring, br acelet, anklet, necklace, glasses, contact lens, or head-mounted device (HMD)), a fabric or clothing integrated type (e.g., electronic clothing), a body-mounted ty pe (e.g., a skin pad or tattoo), and a bio-implantable type (e.g., an implantable cir cuit).

According to various embodiments, the electronic device may be a home appliance. The home appliance may include at least one of, for example, a television (TV), digital versatile disc (DVD) player, audio player, refrigerator, a ir conditioner, vacuum cleaner, oven, microwave oven, washing machine, air cle aner, set-top box, home automation control panel, security control panel, TV box (e.g., Samsung HomeSync^{™}, Apple TV^{™}, or Google TV^{™}), game console (e. g., Xbox^{™} and PlayStation^{™}), electronic dictionary, electronic key, camcorder, and electronic photo frame.

According to another embodiment, the electronic device may inclu de at least one of various medical devices (e.g., various portable medical measuri ng devices (e.g., a blood glucose monitoring device, heart rate monitoring device , blood pressure measuring device, body temperature measuring device, and the 1 ike), magnetic resonance angiography (MRA), magnetic resonance imaging (M RI), computed tomography (CT) machine, and ultrasonic machine), a navigation device, global navigation satellite system (GNSS), event data recorder (EDR), fli ght data recorder (FDR), vehicle infotainment devices, electronic devices for a s hip (e.g., a navigation device for a ship, and a gyro-compass) and avionics, secur ity devices, an automotive head unit, robots for home or industry, automatic telle r's machine (ATM) in banks, point of sales (POS) in a shop, or internet device of things (e.g., a light bulb, various sensors, electric or gas meters, sprinkler device , fire alarm, thermostat, streetlamp, toaster, sporting goods, hot water tank, heate r, boiler, and the like).

According to various embodiments, the electronic device may incl ude at least one of a part of furniture or a building/structure, an electronic board, electronic signature receiving device, projector, and various kinds of measuring i nstruments (e.g., a water meter, electric meter, gas meter, and radio wave meter). In various embodiments, the electronic device may be a combination of one or more of the aforementioned various devices. The electronic device according to various embodiments of the present disclosure may also be a flexible device. Fur ther, the electronic device according to an embodiment of the present disclosure is not limited to the aforementioned devices, and may include new electronic dev ices according to the development of technology.

Hereinafter, an electronic device according to various embodiment s will be described with reference to the accompanying drawings. As used herein , the term "user" may indicate a person who uses an electronic device or a device (e.g., an artificial intelligence electronic device) that uses an electronic device.

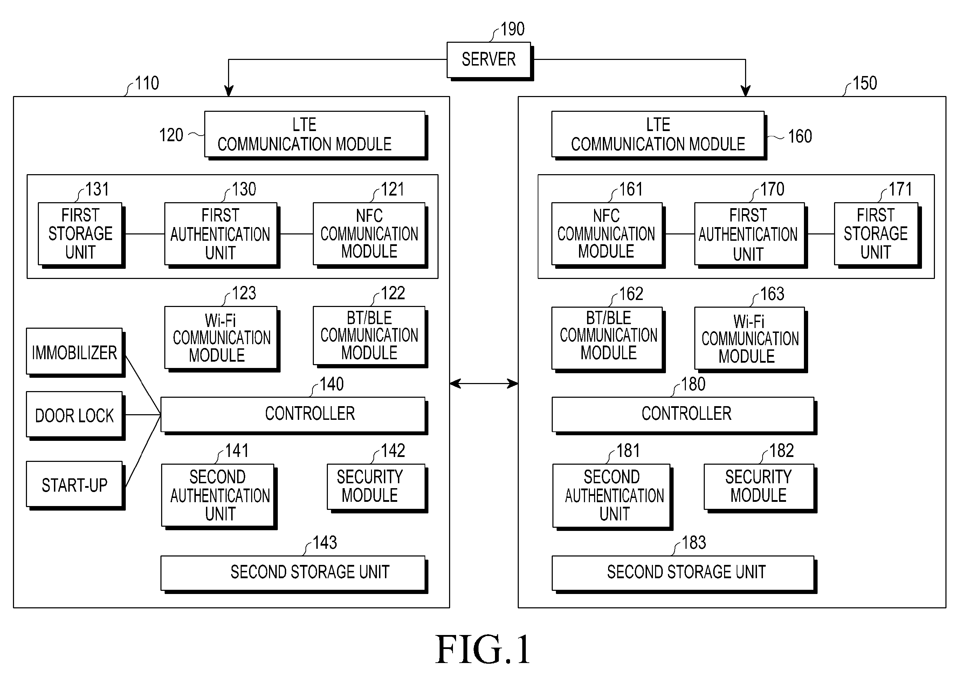

FIG. 1 is a block diagram of a first electronic device and a second electronic device according to various embodiments of the present disclosure.

Referring to FIG. 1, a first electronic device 110, a second electron ic device 150, and a server 190 are illustrated in a network environment accordin g to various embodiments of the present disclosure. The first electronic device 1 10 performs authentication in response to an authentication request, and perform s an operation corresponding to a control signal received from an authenticated e lectronic device. The second electronic device 150 requests authentication to con trol the first electronic device 110. The server 190 may be connected with the fir st electronic device 110 and the second electronic device 150, and may perform authentication with respect to at least one the first electronic device 110 and the second electronic device 150. Also, the server 190 may include a group of one or more servers, at one or more locations.

Hereinafter, the first electronic device 110 indicates a vehicle or an electronic device (e.g., a car-kit) that is included in the vehicle to control the ve hicle or assist in the control of the vehicle, and the second electronic device 150 indicates a smart phone, tablet PC, wearable device, or the like, to allow a user t hereof to control the vehicle. However, this is merely an example for the purpose of description, and embodiments may not be limited thereto.

The first electronic device 110 may be a device that also performs authentication in response to an authentication request, and performs an operatio n corresponding to a control signal received from an authenticated electronic dev ice. The second electronic device 150 may be a device that requests authenticatio n to control the first electronic device 110, and controls the first electronic devic e 110 when it is authenticated.

Hereinafter, descriptions will be provided from the perspective of t he configuration of the first electronic device 110. However, the second electroni c device 150 may include components that are identical or substantially identical to those of the first electronic device 110, and at least one operation described in the first electronic device 110 may be performed in the second electronic device 150 and vice versa. Accordingly, descriptions associated with the duplicated par ts of the second electronic device 150, which will be described in association wit h the first electronic device 110, will be omitted.

According to various embodiments of the present disclosure, the fi rst electronic device 110 includes a communication module, a controller 140, a s econd authentication unit 141, a security module 142, and a second storage unit 143. The communication module may perform communication between the elect ronic device 110 and an external electronic device (e.g., the second electronic de vice 150 or the server 190). For example, the communication module may be co nnected to a network via wireless or wired communication so as to communicate with an external device.

The wireless communication may use at least one of, for example, long term evolution (LTE), LTE-advanced (LTE-A), code division multiple acce ss (CDMA), wideband CDMA (WCDMA), universal mobile telecommunication s system (UMTS), wireless broadband (WiBro), global system for mobile comm unications (GSM), and the like, as a cellular communication protocol.

In addition, the wireless communication may include, for example, short-range communication. The short-range communication may include, for e xample, at least one of WiFi, Bluetooth (BT), near field communication (NFC), GNSS, and the like. GNSS may include at least one of, for example, a global pos itioning system (GPS), global navigation satellite system (Glonass), beidou navi gation satellite system (hereinafter referred to as "Beidou"), and european global satellite-based navigation system (Galileo), according to a use area, bandwidth, or the like. Hereinafter, "GPS" may be used interchangeably with "GNSS" in the present disclosure. The wired communication may include, for example, at least one of a universal serial bus (USB), high definition multimedia interface (HDM I), recommended standard 232 (RS-232), and plain old telephone service (POTS ). The network may also include a communication network, for example, at least one of a computer network (e.g., a local area network (LAN) or wide area netw ork (WAN)), Internet, and telephone network.

The communication module includes an LTE communication mod ule 120, an NFC communication module 121, a BT/BT low energy (BLE) comm unication module 122, and a WiFi communication module 123. Each communic ation module may perform communication with the second electronic device 15 0 and the server 190 through a corresponding communication mode. However, t his is merely an example for the purpose of description, and it should be apparen t to those skilled in the art that various communication modules based on various communication modes may be included.

The NFC communication module 121 may be included in a hardw are module that also includes a first authentication unit 130 and a first storage un it 131. The NFC communication module 121, the first authentication unit 130, a nd the first storage unit 131 may be disposed in the hardware module separately, unlike other components of the first electronic device 110 and thus, hardware-ba sed security may be applied thereto. For example, the controller 140 or the secon d authentication unit 141 of the first electronic device 110 may not be aware of t he result of the authentication performed by the first authentication unit 130, and may not be capable of directly using information stored in the first storage unit 131 without using the first authentication unit 130. As described above, the first authentication unit 130 and the first storage unit 131 are disposed in a separate h ardware module and hardware-based security is applied thereto and thus, the sec urity of the first authentication unit 130 and the first storage unit 131 is very stro ng.

Although FIG. 1 illustrates that only the first authentication unit 13 0 and the first storage unit 131 corresponding to the NFC communication modul e 121 are contained therein, this is merely an example for the purpose of descript ion and embodiments may not be limited thereto. An authentication unit and a st orage unit corresponding to each communication module may be separately incl uded in the first electronic device 110.

The first electronic device 110 and the second electronic device 15 0 may include a bus (not illustrated), and the bus may include, for example, a cir cuit for connecting the component elements included in the first electronic devic e 110 and transferring communications (e.g., control messages and/or data) betw een the component elements included in the first electronic device 110.

The controller 140 may include one or more of a CPU, AP, and co mmunication processor (CP). For example, the processor may perform operation s or data processing related to the control and/or communication of at least one c omponent of the first electronic device 110. The controller 140 may also perform authentication through the second authentication unit 141 in response to an auth entication request through other communication modules excluding the NFC co mmunication module 121 that is disposed in the hardware module including the first authentication unit 130 and the first storage unit 131. The controller 140 ma y also control a vehicle immobilizer, vehicle door-lock, vehicle start-up device, a nd the like, which are only a few of the possible mechanical components of the f irst electronic device 110.

The second storage unit 143 may include a volatile memory and/or a non-volatile memory. The second storage unit 143 may store, for example, alg orithms, instructions and/or data relevant to at least one component of the first el ectronic device 110. According to an embodiment of the present disclosure, the s econd storage unit 143 may store software and/or programs. The programs may i nclude, for example, a kernel, middleware, an application programming interface (API), and/or application programs (or "applications"). At least some of the ker nel, middleware, and API may function as and be referred to as an operating syst em (OS).

The kernel may control or manage system resources (e.g., the bus, controller 140, or second storage unit 143) used for performing an operation or f unction implemented by the other programs (e.g., the middleware, API, or applic ation programs). The kernel may also provide an interface through which the mi ddleware, API, or application programs may access the individual components o f the electronic device 110 to control or manage the system resources.

The middleware may serve as an intermediary so that an API or an application program communicates with a kernel and exchanges data.

Alternatively, the middleware may process one or more task reque sts received from an application program based on priorities. For example, the m iddleware may assign to at least one of the application programs, priorities for us ing the system resources (e.g., the bus, controller 140, second storage unit 143, o r the like) of the electronic device 110. The middleware may perform scheduling or load balancing on the one or more task requests by processing the one or mor e task requests according to the priorities assigned thereto.

The API is an interface through which the applications control fun ctions provided from the kernel or the middleware, and may include, for exampl e, at least one interface or function (e.g., instruction) for file control, window co ntrol, image processing, problem control, or the like.

The first electronic device 110 may also include an input/output int erface (not illustrated) and a display (not illustrated). The input/output interface, for example, may function as an interface that may transfer instructions or data i nput from a user or another external device to the other component(s) of the elec tronic device 110. The input/output interface may also output the instructions or data received from the other component(s) of the electronic device 110 to a user or another external device.

The display may include, for example, a liquid crystal display (LC D), a light-emitting diode (LED) display, an organic LED (OLED) display, a mi croelectromechanical systems (MEMS) display, and an electronic paper display. The display, for example, may display various types of contents (e.g., text, imag es, videos, icons, or symbols) to a user. The display may also include a touch scr een, and may receive, for example, a touch, gesture, proximity, or hovering input by using an electronic pen or a body part of a user.

According to various embodiments of the present disclosure, some or all of the operations performed by the first electronic device 110 and the seco nd electronic device 150 may be performed by another electronic device or by a plurality of electronic devices. According to an embodiment of the present disclo sure, when the first electronic device 110 and the second electronic device 150 a re to perform a function or service automatically or by request, the first electroni c device 110 and the second electronic device 150 may request, from another ele ctronic device, at least some function related thereto, instead of, or in addition to, performing the function or service by itself. The other electronic device may per form the requested function or additional functions, and may transfer the results t o the first electronic device 110 and the second electronic device 150. The first e lectronic device 110 and the second electronic device 150 may provide the result s as received or after additional processing, and provide the requested function o r service based thereon. To this end, for example, cloud computing, distributed c omputing, or client-server computing technology may be used.

The controller 140 may process at least some of the information ob tained from other components (e.g., at least one of the second authentication unit 141, security module 142, second storage unit 143, input/output interface, com munication interface, and the like), and use the at least some of the information i n various methods. For example, the controller 140 may control at least some fu nctions of the first electronic device 110 so that the first electronic device 110 w orks together with another electronic device. The controller 140 may be integrate d with the communication module. According to an embodiment of the present d isclosure, at least one component of the controller 140 may be included in an ext ernal server, and the external server may support at least one operation impleme nted in the controller 140.

According to an embodiment of the present disclosure, the second storage unit 143 may include instructions that enable the controller 140 to operat e. For example, the second storage unit 143 may include instructions that enable the controller 140 to control other components of the first electronic device 110, and to work together with another electronic device or an external server. Based on the instructions stored in the second storage unit 143, the controller 140 may control other components of the first electronic device 110, and may work togeth er with another electronic device or an external server. Hereinafter, the operation s of the first electronic device 110 will be described from the perspective of each of the components of the first electronic device 110. Instructions that enable an operation of each component to be performed may be included in the second stor age unit 143.

According to various embodiments of the present disclosure, the fi rst authentication unit 130 may perform authentication with respect to the second electronic device 150 that requests authentication through a first communication mode (e.g., NFC). However, this is merely for the purpose of description, and e mbodiments may not be limited thereto. Also, it should be apparent to those skill ed in the art that various communication modes may be applicable. The first auth entication unit 130 may receive an authentication request from the second electr onic device 150 through the NFC communication module 121. The first authenti cation unit 130 may then perform authentication with respect to the second electr onic device 150.

When the second electronic device 150 is authenticated, the first a uthentication unit 130 may transmit first information (e.g., credential infonmatio n) used for controlling the first electronic device 110 to the second electronic de vice 150 through the first communication mode. For example, when the second e lectronic device 150 is authenticated, the first authentication unit 130 may trans mit the first information stored in the first storage unit 131, to the second electro nic device 150 through the NFC communication module 121.

The first information may be used for directly controlling the first electronic device 110 and thus, the security level of the first information may be set to be high. Therefore, authority is separately required to interpret or utilize th e first information. When the first information is encrypted, a separate security k ey may also be required to ascertain the first information. At least one of an auth ority and a security key required for using the first information may also be store d in the first storage unit 131.

The first information is information used for directly controlling th e first electronic device 110 and thus, the information may be available only to t he second electronic device 150 that is authenticated by the first electronic devic e 110. Therefore, the first authentication unit 130 may further transfer at least on e of the authority and the security key in association with the first information to the authenticated second electronic device 150. The first information and the aut hority and security key in association with the first information may be transmitt ed to the second electronic device 150 simultaneously or sequentially, periodical ly or aperiodically.

In an embodiment, the first information may be transmitted to the s econd electronic device 150 only when the second electronic device 150 is authe nticated through the first communication mode. For example, the authority and t he security key in association with the first information may be set to be unique t o the first communication mode so that an authentication unit that performs auth entication through another communication mode does not use or ascertain the fir st information. Further, in an embodiment, the authority and the security key in a ssociation with the first information may not be shared with an authentication un it (e.g., the second authentication unit 141) that performs authentication through another communication mode, excluding the first communication. The authority and the security key in association with the first information may be set to not all ow the authentication unit (e.g., the second authentication unit 141) that perform s authentication through another communication mode to read the authority and t he security key. As described above, the authority and the security key in associa tion with the first information is set to be unique to the first communication mod e and thus, may not be used by the authentication unit (e.g., the second authentic ation unit 141) that performs authentication through another communication mo de.

Further, in an embodiment, the first information may be one-time u se information. For example, the first information may be information that is ava ilable from the time when the second electronic device 150 is authenticated by th e first electronic device 110, to a time when a connection between the first electr onic device 110 and the second electronic device 150 is terminated. The first inf ormation may be discarded after the connection between the first electronic devi ce 110 and the second electronic device 150 is terminated. Accordingly, the seco nd electronic device 150 may again perform a procedure of obtaining first infor mation to control the first electronic device 110. In an embodiment, the second e lectronic device 150 may not discard the first information, but may perform a pr ocedure that additionally obtains separate information corresponding to the first i nformation from the first electronic device 110 to use the first information again.

In addition, the first information may include core information use d for controlling a core component or system of the first electronic device 110, a nd subsidiary information used for controlling a subsidiary component or system of the first electronic device 110. For example, the core information may be aut hentication information used for controlling a component or system (e.g., a vehic le start-up device, vehicle immobilizer, vehicle accelerator, vehicle decelerator, vehicle breaking device, and the like) in association with the driving of the first e lectronic device 110. The subsidiary information may also be authentication info rmation used for controlling a component or a system (e.g., a vehicle audio syste m, vehicle navigation system, vehicle window control device, vehicle air conditi oner, vehicle heater, vehicle heat-ray sheet or air-blast sheet control device, and t he like), which is not connected with the driving of the first electronic device 11 0.

The first authentication unit 130 may transmit both the core inform ation and the subsidiary information included in the first information to the seco nd electronic device 150, based on an authentication level of the second electroni c device 150, and may transmit only the subsidiary information excluding the co re information to the second electronic device 150. Further, in an embodiment, b ased on a request from a user or the like, only the core information may be trans mitted to the second electronic device 150.

For example, when the security level of the second electronic devi ce 150 is set to be higher than a security level that allows the reception of the cor e information or when authentication information corresponding to the security 1 evel that allows reception of the core information is obtained from the second ele ctronic device 150 during the authentication process, the first authentication unit 130 may transmit both the core information and the subsidiary information to the second electronic device 150.

Conversely, when the security level of the second electronic device 150 is set to be lower than the security level that allows the reception of the core information or when authentication information corresponding to the security le vel that allows reception of the core information is not obtained from the second electronic device 150 during the authentication process, the first authentication u nit 130 may transmit only the subsidiary information excluding the core informat ion to the second electronic device 150. When only the subsidiary information is received, the second electronic device 150 may not control the core component or system of the first electronic device 110.

According to various embodiments of the present disclosure, the fi rst authentication unit 130 may transfer second information indicating that the se cond electronic device 150 is authenticated to the second authentication unit 141 . The second authentication unit 141 may perform authentication through a com munication mode that is different from the first communication mode used by th e first authentication unit 130. When an authentication unit for each communicat ion mode is separately included in the first electronic device 110, each authentic ation unit may need to share an authentication result with one another so that eac h authentication unit does not redundantly perform an authentication procedure. When each authentication unit shares the authentication result, an authentication procedure may not be separately performed for each communication mode. For e xample, when the second authentication unit 141 obtains the second information, the second authentication unit 141 may determine that the second electronic dev ice 150 is authenticated based on the second information, although a separate aut hentication procedure is not performed with the second electronic device 150 thr ough second communication that is different from the first communication.

The second information is information indicating that the second el ectronic device 150 is authenticated, and may be used when an authentication un it of each communication mode determines whether to perform authentication wi th respect to the second electronic device 150. The second information may be in eluded in the state information for operating the first electronic device 110.

In addition, when the first information is transmitted to the second electronic device 150, the second information may include state information indi eating whether both the core information and the subsidiary information are tran smitted, or whether only the subsidiary information is transmitted. Through the a bove, an authentication unit for each communication mode may recognize infor mation that the second electronic device 150 receives, which is to be used for co ntrolling the first electronic device 110. Accordingly, whether to process a contr ol signal may be determined based on the second information.

In one example, the second electronic device 150 transmits to the f irst electronic device 110 through the second communication mode, a control sig nal for controlling a component or a system associated with the driving of the fir st electronic device 110 in a state in which the second electronic device 150 perf orms authentication through the first communication mode and receives only the subsidiary information. In this instance, the second authentication unit 141 ascer tains the second information, and recognizes that the second electronic device 15 0 fails to obtain core information, which is authentication information used for c ontrolling a component or a system that is associated with the driving of the first electronic device 110. Accordingly, the controller 140 determines that the secon d electronic device 150 is not authorized to control the component or system ass ociated with driving of the first electronic device 110, and may not process a con trol signal received from the second electronic device 150.

The second information is not information that is directly used for controlling the first electronic device 110, unlike the first information and thus, t he security level of the second information may be set to be lower than the first i nformation. However, the second information includes information associated w ith the second electronic device 150, an authentication result in association with t he second electronic device 150 and the like and thus, authority is separately req uired to interpret or use the second information. Further, when the second inform ation is encrypted, a security key may also be separately required to ascertain or use the second information. However, the second information is information sha red by each authentication unit and thus, authority and a security key associated with the second information may be set to be common for each authentication un it and may be shared by each authentication unit.

The first authentication unit 130 may further transfer at least one o f the authority and the security key in association with the second information to the second authentication unit 141. The second authentication unit 141 may asce rtain and use the second information using the obtained at least one of the author ity and the security key in association with the second information. The second a uthentication unit 141 may recognize an authentication result with respect to the second electronic device 150 by ascertaining the second information.

However, the second authentication unit 141 and the second storag e unit 143 may not be disposed in a separate hardware module, unlike the first au thentication unit 130 and the first storage unit 131, but may be embodied throug h at least one processor included in the first electronic device 110. Accordingly, t o maintain the security for the second information, the security module 142 is se parately required.

The security module 142 may be a separate module that is embodi ed to process data of which the security level is set to be high. For example, the s ecurity module 142 may be a secure area that is virtually set through at least one processor that is included in the first electronic device 110. The security module 142 may be embodied through software, and the virtual secure area may be set to be distinguished from a normal area that processes a normal instruction or opera tion of the first electronic device 110. By partitioning a single processor, a first a rea may be set as a normal area and a second area may be set as a secure area. H owever, this is merely an example for the purpose of description, and embodime nts may not be limited thereto. It should be apparent to those skilled in the art tha t various security technologies are applicable to distinctively process normal dat a and data in a high security level.

A virtual secure area may also be set in the second storage unit 143 in the first electronic device 110. Accordingly, the normal area may not access d ata stored in the virtual secure area of the second storage unit 143, and the data st ored in the virtual secure area of the second storage unit 143 may be accessed thr ough only the virtual secure area.

For example, in an embodiment, the second information may be as certained or used through only the security module 142. The second authenticati on unit 141 may ascertain the second information using at least one of the author ity and the security key in association with the second information in a virtual se cure area that is set in advance, such as the security module 142. In addition, the second authentication unit 141 may receive the second information from the first authentication unit 130 through the security module 142. Further, the second inf ormation may be stored in the virtual secure area set in the second storage unit 1 43 to be distinguished from other data. Accordingly, without using the security module 142, access to the second information may not be allowed.

According to various embodiments of the present disclosure, the se cond authentication unit 141 may perform authentication with respect to the seco nd electronic device 150 that requests authentication through a second communi cation mode. When the authentication of the second electronic device 150 is not performed by the first electronic device 110, the second electronic device 150 m ay request authentication from the first electronic device 110 through the second communication mode. The second authentication unit 141 may perform authenti cation with respect to the second electronic device 150 in response to the request

When the second electronic device 150 is authenticated, the second authentication unit 141 may transmit to the second electronic device 150 throug h the second communication mode, third information (e.g., credential informatio n) used for controlling the first electronic device 110. When the second electroni c device 150 is authenticated, as the authentication is performed, the second auth entication unit 141 may transmit to the second electronic device 150 through the second communication mode, the third information stored in the second storage unit 143.

The third information may be used for directly controlling the first electronic device 110, similar to the first information and thus, the security level of the third information may be set to be high. Therefore, authority is separately required to interpret or utilize the third information. When the third information i s encrypted, a separate security key may be required to ascertain the third inform ation. The authority and the security key required for using the third information may be stored in the second storage unit 143. The third information may be store d in a virtual secure area that is set in advance in the second storage unit 143 in t he same manner as the second information.

However, as described above, the second authentication unit 141 a nd the second storage unit 143 may not be disposed in a separate hardware modu le, unlike the first authentication unit 130 and the first storage unit 131 and thus, the second authentication unit 141 and the second storage unit 143 may ascertain the third information through the security module 142 for security in the same manner as the second information.

The third information may also be transmitted to the second electro nic device 150 only when the second electronic device 150 is authenticated throu gh the second communication mode. For example, authority and a security key i n association with the third information may be set to be unique to the second co mmunication mode so that an authentication unit (e.g., the first authentication un it 130) that performs authentication through another communication mode does not use or ascertain the third information. In an embodiment, the authority and th e security key in association with the third information may not be shared with a n authentication unit (e.g., the first authentication unit 130) that performs authent ication through another communication mode excluding the second communicati on mode. As described above, the authority and the security key in association w ith the third information is set to be unique to the second communication and thu s, may not be used or interpreted by the authentication unit (e.g., the first authent ication unit 130) that performs authentication through another communication m ode.

The third information is used for controlling the first electronic dev ice 110, similar to the first information, and may be information identical or link ed to the first information. However, although the third information is identical o r linked to the first information, the authority and the security key required for as certaining or using the third information may not be identical to the authority an d the security key required for ascertaining or using the first information.

The authority and security key required for each of the first inform ation, second information, and third information may be generated respectively f rom the first authentication unit 130 and the second authentication unit 141 inclu ded in the first electronic device 110, or may be obtained from the external serve r 190. However, as described above, the first information is set to be unique to th e first communication mode, and the third information is set to be unique to the s econd communication mode and thus, the information may not be shared betwee n authentication units. Conversely, the second information may be commonly us ed for the first communication mode and the second communication mode and t hus, may be shared between authentication units.

According to various embodiments of the present disclosure, to str engthen the security, the first information and the second information may be obt ained from the separate external server 190 that performs authentication with res pect to at least one electronic device. At least one of the authority and the securit y key in association with the first information, and at least one of the authority a nd the security key in association with the second information, may also be obtai ned from the server 190. In addition, for security, the authentication with respect to the second electronic device 150 which is performed by the first authenticatio n unit 130 and the second authentication unit 141, may be performed in the serve r 190, and the server 190 may transmit an authentication result to the first authen tication unit 130 and the second authentication unit 141.

According to various embodiments of the present disclosure, after t he authentication with respect to the second electronic device 150 is performed t hrough the first communication mode, the controller 140 may receive a control s ignal from the second electronic device 150 through the second communication mode. In this instance, the controller 140 may determine whether the second elec tronic device 150 is authenticated based on the second information that is transfe rred to the second authentication unit 141. For example, the controller 140 may d etermine that the second electronic device 150 is authenticated through the secon d authentication unit 141, or may directly determine that the second electronic de vice 150 is authenticated through the security module 142.

When it is determined that the second electronic device 150 is auth enticated, the controller 140 may perform communication with the second electr onic device 150 through the second communication mode. For example, the cont roller 140 may process a control signal that is received from the second electroni c device 150, and may perform an operation corresponding to the control signal. As described above, although the control signal is received through the second c ommunication mode, the controller 140 may not perform a separate authenticatio n procedure through the second communication mode, and may determine wheth er to perform authentication with respect to the second electronic device 150 bas ed on the second information.

According to various embodiments of the present disclosure, the c ontroller 140 may receive a control signal from each of at least one authenticated electronic device. For example, when a plurality of electronic devices exist that are authenticated by the first electronic device 110, control signals may be receiv ed simultaneously from the plurality of electronic devices. In this instance, the c ontroller 140 may determine a control signal to be preferentially processed amon g the received control signals based on a predetermined standard and the controll er 140 may process the determined control signal.

The predetermined standard may include at least one of a distance between each of the at least one electronic device and the first electronic device, a security level of authentication performed between each of the at least one elec tronic device and the first electronic device, a communication mode used for aut hentication performed between each of the at least one electronic device and the first electronic device, a communication connection state of each of the at least o ne electronic device, and an order of a control signal received from each of the at least one electronic device.

A detailed method to determine the control signal to be preferential ly processed among the received control signals based on the predetermined stan dard, will be described in greater detail.

Returning to FIG. 1, according to various embodiments of the pres ent disclosure, the second electronic device 150 may include a communication m odule, a controller 180, a second authentication unit 181, a security module 182, and a second storage unit 183. The communication module may be connected to a network via wireless or wired communication so as to communicate with an ex ternal device.

The controller 180 may include one or more of a CPU, AP, and co mmunication processor (CP). For example, the processor may perform operation s or data processing related to the control and/or communication of at least one c omponent of the second electronic device 150.

The communication module may include an LTE communication module 160, an NFC communication module 161, a BT/BLE communication m odule 162, and a WiFi communication module 163. Each communication modul e may perform communication with the first electronic device 110 and the server 190 through a corresponding communication mode. However, this is merely an example for the purpose of description, and it should be apparent to those skilled in the art that various communication modules based on various communication modes may be included.

Further, the NFC communication module 161 may be included in a hardware module that also includes a first authentication unit 170 and a first stor age unit 171. The NFC communication module 161, the first authentication unit 170, and the first storage unit 171 may be disposed in the hardware module separ ately, unlike other components of the second electronic device 150 and thus, har dware-based security may be applied thereto. For example, the controller 180 or the second authentication unit 181 of the second electronic device 150 may not b e aware of the result of the authentication performed by the first authentication u nit 170, and may not be capable of using information stored in the first storage u nit 171. As described above, the first authentication unit 170 and the first storage unit 171 are disposed in a separate hardware module and hardware-based securit y is applied thereto and thus, the security of the first authentication unit 170 and the first storage unit 171 is very strong.

Although FIG. 1 illustrates that only the NFC communication mod ule 161 separately contains the first authentication unit 170 and the first storage unit 171, this is merely an example for the purpose of description and embodime nts may not be limited thereto. An authentication unit and a storage unit may be separately contained for each communication module.

According to various embodiments of the present disclosure, the fi rst authentication unit 170 may request authentication with respect to the second electronic device 150 through first communication mode (e.g., NFC). The first a uthentication unit 170 may request authentication with respect to the second elec tronic device 150 so as to control the first electronic device 110.

When the second electronic device 150 is authenticated, the first a uthentication unit 170 may receive from the first electronic device 110 through t he first communication mode, first information (e.g., credential information) use d for controlling the first electronic device 110. The first authentication unit 170 may store the received first information in the first storage unit 171. The first aut hentication unit 170 may also enable the controller 180 to use the first informatio n when the controller 180 generates a control signal to control the first electronic device 110. Although the controller 180 does not directly use the first infonmati on that is stored in the first storage unit 171, the controller 180 may use the first i nformation through the first authentication unit 170 when generating the control signal.

The first information may be used for directly controlling the first electronic device 110 and thus, the security level of the first information may be set to be high. Therefore, authority is separately required to interpret or utilize th e first information. When the first information is encrypted, a separate security k ey may be required to ascertain the first information. Accordingly, the first authe ntication unit 170 may further receive at least one of the authority and the securit y key in association with the first information.

In addition, the first information may include core information use d for controlling a core component or system of the first electronic device 110, a nd subsidiary information used for controlling a subsidiary component or system of the first electronic device 110. For example, the core information may be aut hentication information used for controlling a component or a system (e.g., a veh icle start-up device, vehicle immobilizer, vehicle accelerator, vehicle decelerator , vehicle breaking device, and the like) in association with the driving of the first electronic device 110. The subsidiary information may also be authentication in formation used for controlling a component or a system (e.g., a vehicle audio sys tem, vehicle navigation system, vehicle window control device, vehicle air condi tioner, vehicle heater, vehicle heat-ray sheet or air-blast sheet control device, and the like), which is not connected with the driving of the first electronic device 1 10.

The first authentication unit 170 may receive both the core informa tion and the subsidiary information included in the first information from the firs t electronic device 110 based on an authentication level of the second electronic device 150, and may receive only the subsidiary information excluding the core i nformation from the first electronic device 110. According to an embodiment, by request from a user or the like, only the core information may be received from t he first electronic device 110.

For example, when the security level of the second electronic devi ce 150 is set to be higher than a security level that allows the reception of the cor e information or when authentication information corresponding to the security 1 evel that allows the reception of the core information is received from the first el ectronic device 110 during the authentication process, the first authentication uni t 170 may receive both the core information and the subsidiary information from the first electronic device 110.

Conversely, when the security level of the second electronic device 150 is set to be lower than the security level that allows reception of the core inf ormation or when authentication information corresponding to the security level that allows reception of the core information is not received from the first electro nic device 110 during the authentication process, the first authentication unit 170 may receive only the subsidiary information excluding the core information fro m the first electronic device 110.

When only the subsidiary information is received, the second elect ronic device 150 may not control the core component or system of the first electr onic device 110. That is, the second electronic device 150 may not be capable of generating a control signal for controlling the core component or system of the fi rst electronic device 110. Also, although second electronic device 150 generates a control signal to control the core component or system of the first electronic de vice 110 and transmits the same to the first electronic device 110, the first electr onic device 110 may not process the control signal.

The first authentication unit 170 may transfer second information i ndicating that the second electronic device is authenticated, to the second authen tication unit 181. The second authentication unit 181 may request authentication through a communication mode that is different from the first communication m ode used by the first authentication unit 170. When an authentication unit for eac h communication mode is separately included in the first electronic device 110, e ach authentication unit may need to share an authentication result with one anoth er so that each authentication unit does not redundantly perform an authenticatio n procedure. When each authentication unit shares the authentication result, an a uthentication procedure may not be separately performed for each communicatio n mode. For example, when the second authentication unit 181 obtains the secon d information, the second authentication unit 181 may determine that the second electronic device 150 is authenticated based on the second information, although authentication is not requested to the first electronic device 110 through the seco nd communication mode.

The second information is information indicating that the second el ectronic device 150 is authenticated, and may be used when an authentication un it for each communication mode determines whether to perform authentication with respect to the second electronic device 150. The second information may be included in the state information for driving the second electronic device 150.

In addition, when the first information is received by the first electr onic device 110, the second information may include state information indicatin g whether both core information and subsidiary information are received, or only the subsidiary information is received. Through the above, the authentication un it corresponding to each communication mode may recognize information that th e second device 150 receives, which is to be used for controlling the first electro nic device 110. Accordingly, based on the second information, whether to gener ate or transmit the control signal may be determined.

In one example, the second electronic device 150 generates or tran smits a control signal for controlling a component or a system associated with th e driving of the first electronic device 110 in a state in which the second electron ic device 150 performs authentication through the first communication mode and receives only the subsidiary information. In this instance, the second authenticat ion unit 181 ascertains the second information and recognizes that the second ele ctronic device 150 fails to obtain core information, which is authentication infor mation used for controlling a component or a system that is associated with drivi ng of the first electronic device 110. Accordingly, the controller 180 determines that the second electronic device 150 is not authorized to control the component or system associated with the driving of the first electronic device 110, and may not generate a control signal. When the control signal is generated, the controller 180 may perform a control so that the control signal is not transmitted to the firs t electronic device 110.

The second information includes information associated with the s econd electronic device 150, an authentication result in association with the seco nd electronic device 150, and the like and thus, authority is separately required t o use the second information. Accordingly, the first authentication unit 170 may further transfer at least one of the authority and the security key in association wi th the second information, to the second authentication unit 181. The second aut hentication unit 181 may ascertain the second information using the obtained at 1 east one of the authority and the security key in association with the second infor mation. The second authentication unit 181 may recognize an authentication resu It with respect to the second electronic device 150 by ascertaining the second inf ormation.

However, the second authentication unit 181 and the second storag e unit 183 may not be disposed in a separate hardware module, unlike the first au thentication unit 170 and the first storage unit 171, but may be embodied throug h at least one processor included in the second electronic device 150. Accordingl y, to maintain the security with respect to the second information, the security m odule 182 is separately required.

The security module 182 may be a separate module that is embodi ed to process data of which the security level is set to be high. For example, the s ecurity module 182 may be included in a virtual secure area that is set through at least one processor included in the second electronic device 150, and the second information may be ascertained or used in only the virtual secure area. The seco nd authentication unit 181 may ascertain or use the second information, using th e authority and the security key in association with the second information, in th e security module 182 and/or a security mode that is set in advance through the s ecurity module 182. In addition, the second authentication unit 181 may receive the second information from the first authentication unit 170 through the security module 182. The security module 182 may be embodied equivalently to the sec urity module 142 of the first electronic device 110.

According to various embodiments of the present disclosure, to str engthen the security, the first information and the second information may be obt ained from the separate external server 190 that performs authentication. At least one of the authority and the security key in association with the first information and at least one of the authority and the security key in association with the seco nd information may also be obtained from the server 190. In addition, the first au thentication unit 170 and the second authentication unit 181 may request authent ication through the server 190, and the first authentication unit 170 and the secon d authentication unit 181 may receive an authentication result from the server 19 0.

According to various embodiments of the present disclosure, the c ontroller 180 may control the first electronic device 110 by transmitting the gene rated control signal to the first electronic device 110. The control signal may be generated using the first information. The controller 180 may also perform com munication with the first electronic device through the second communication m ode in response to an event in which the second authentication unit 181 receives the second information. As described above, the controller 180 may determine w hether the second electronic device 150 is authenticated based on the second info rmation that is transferred to the second authentication unit 181. For example, th e controller 180 may determine that the second electronic device 150 is authentic ated through the second authentication unit 181, or may directly determine that t he second electronic device 150 is authenticated through the security module 18 2.

When it is determined that the second electronic device 150 is auth enticated, the controller 180 may perform communication with the second electr onic device 150 through the second communication mode. For example, when it is determined that the second electronic device 150 is authenticated, the controll er 180 may omit an operation of requesting authentication through the second co mmunication mode when transmitting a control signal through the second comm unication mode.

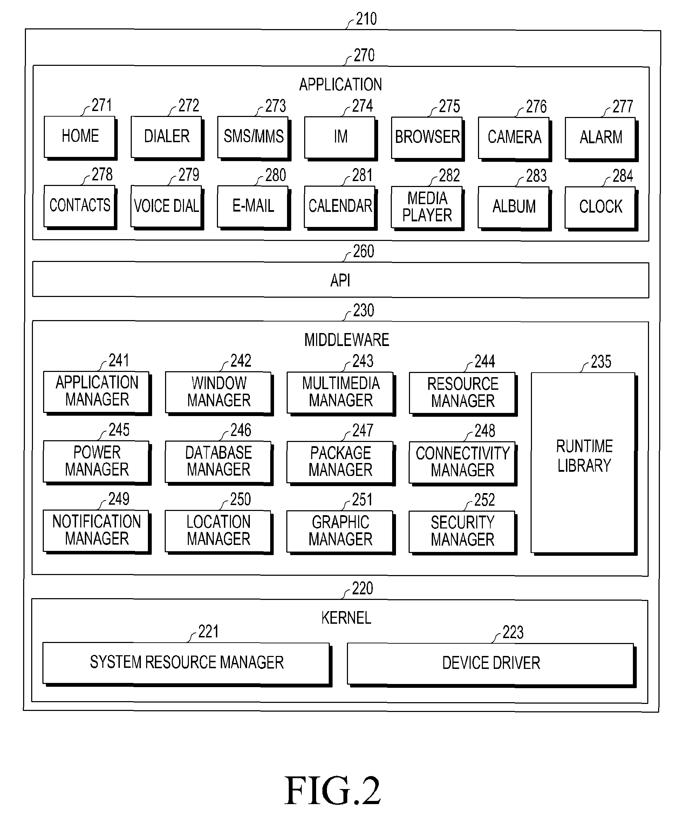

FIG. 2 is a block diagram of a program module according to variou s embodiments of the present disclosure.

According to an embodiment of the present disclosure, a program module 210 may include an OS for controlling resources related to the electronic device (e.g., the first electronic device 110 and the second electronic device 150 ) and/or various applications performed in the OS. The OS may be, for example, Android, iOS, Windows, Symbian, Tizen, Bada, or the like.

Referring to FIG. 2, the program module 210 includes a kernel 220 , middleware 230, an API 260, and/or an application 270. At least some of the pr ogram module 210 may be preloaded on an electronic device, or may be downlo aded from an external electronic device (e.g., the server 190).

The kernel 220 may include, for example, a system resource mana ger 221 and/or a device driver 223. The system resource manager 221 may contr ol, assign, or collect system resources. According to an embodiment of the prese nt disclosure, the system resource manager 221 may include a process manager, memory manager, file system manager, or the like. The device driver 223 may in clude, for example, a display driver, camera driver, BT driver, shared memory dr iver, USB driver, keypad driver, Wi-Fi driver, audio driver, or inter-process com munication (IPC) driver.

The middleware 230 may, for example, provide a function commo nly required by the applications 270, or may provide various functions to the app lications 270 through the API 260 so that the applications 270 can efficiently use limited system resources within the electronic device. According to an embodim ent of the present disclosure, the middleware 230 may include at least one of a ru ntime library 235, an application manager 241, a window manager 242, a multim edia manager 243, a resource manager 244, a power manager 245, a database ma nager 246, a package manager 247, a connectivity manager 248, a notification m anager 249, a location manager 250, a graphic manager 251, and a security mana ger 252.

The runtime library 235 may include, for example, a library modul e that a compiler uses in order to add new functions through a programming lang uage while the applications 270 are executed. The runtime library 235 may perfo rm input/output management, memory management, arithmetic functions, or the like.

The application manager 241 may, for example, manage a life cycl e of at least one of the applications 270. The window manager 242 may manage graphical user interface (GUI) resources used on a screen. The multimedia mana ger 243 may identify formats required for the reproduction of various media files and encode or decode a media file using a codec suitable for a corresponding for mat. The resource manager 244 may manage resources of at least one of the appl ications 270, such as a source code, memory, storage space, and the like.

The power manager 245 may operate together with, for example, a basic input/output system (BIOS) to manage a battery or power, and may provid e power information required for the operation of an electronic device. The datab ase manager 246 may generate, search for, or change a database to be used in at l east one of the applications 270. The package manager 247 may manage the inst allation or updating of an application distributed in the form of a package file.

The connectivity manager 248 may manage a wireless connection such as, for example, WiFi, BT, or the like. The notification manager 249 may di splay or report an event, such as an arrival message, appointment, proximity noti fication, and the like, in such a manner so as not to disturb a user. The location manager 250 may manage location information of an electronic device. The grap hic manager 251 may manage a graphic effect to be provided to a user and a UI r elating to the graphic effect. The security manager 252 may provide security fun ctions required for system security, user authentication, or the like. According to an embodiment of the present disclosure, when an electronic device (e.g., the firs t electronic device 110 and the second electronic device 150) has a phone call fu nction, the middleware 230 may further include a telephony manager for managi ng a voice call function or a video call function of the electronic device.

The middleware 230 may include a middleware module that forms combinations of various functions of the above described elements. The middle ware 230 may provide a specialized module for each type of OS in order to provi de a differentiated function. Furthermore, the middleware 230 may dynamically remove some of the existing components, or may add new components.

The API 260 is, for example, a set of API programming functions, and may be provided with a different configuration according to an OS. For exa mple, in the case of Android or iOS, one API set may be provided for each platf orm, and in the case of Tizen, two or more API sets may be provided for each pl atform.

The applications 270 may include, for example, one or more applic ations that can provide functions, such as a home 271, dialer 272, short message service (SMS)/multimedia message service (MMS) 273, instant message (IM) 2 74, browser 275, camera 276, alarm 277, contacts 278, voice dial 279, email 280 , calendar 281, media player 282, album 283, clock 284, health care (e.g., measu re exercise quantity or blood sugar), or environment information (e.g., atmosphe ric pressure, humidity, or temperature information).

According to an embodiment of the present disclosure, the applicat ions 270 may include an application (hereinafter, referred to as an "information e xchange application" for convenience of description) that supports exchanging i nformation between the electronic device (e.g., the first electronic device 110 an d the second electronic device 150) and an external electronic device. The applic ation associated with exchanging information may include, for example, a notifi cation relay application for notifying an external electronic device of certain info rmation or a device management application for managing an external electronic device.

The notification relay application may include a function of transfe rring, to an external electronic device, notification information generated from ot her applications of an electronic device (e.g., an SMS/MMS application, e-mail a pplication, health management application, or environmental information applica tion). Further, the notification relay application may receive notification informa tion from, for example, an external electronic device, and may provide the receiv ed notification information to a user.

The device management application may manage (e.g., install, dele te, or update) at least one function of an external electronic device communicatin g with an electronic device (e.g., a function of turning on/off the external electro nic device itself or some components, or a function of adjusting luminance or res olution of the display), applications operating in the external electronic device, o r services provided by the external electronic device (e.g., a call service, messag e service, or the like).

According to an embodiment of the present disclosure, the applicat ions 270 may include applications (e.g., a health care application of a mobile me dical appliance or the like) designated according to attributes of an external elect ronic device. According to an embodiment of the present disclosure, the applicat ion 270 may include an application received from an external electronic device. According to an embodiment of the present disclosure, the applications 270 may include a preloaded application or a third party application, which can be downlo aded from the server. Names of the elements of the program module 210 accordi ng to the above-described embodiments of the present disclosure may change de pending on the type of OS.

According to various embodiments of the present disclosure, at lea st some of the program module 210 may be implemented in software, firmware, hardware, or a combination of two or more thereof. At least some of the program module 210 may be implemented (e.g., performed) by, for example, the process or(s) of controllers 140 and 180. At least a part of the program module 210 may i nclude, for example, a module, program, routine, set of instructions, and/or proc ess for performing one or more functions described herein.

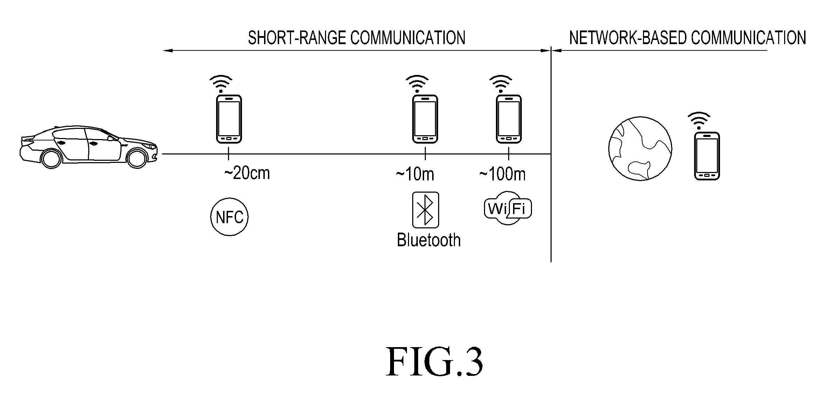

FIG. 3 illustrates a communication mode that is available based on a distance between a first electronic device and a second electronic device accor ding to various embodiments of the present disclosure.

Referring to FIG. 3, in an example where a vehicle is a first electro nic device and a smart phone is a second electronic device, various communicati on modes may be used based on the distance between the vehicle and the smart p hone, and a coverage associated with a communication mode.

For example, when the distance between the vehicle and the smart phone is close (e.g., within 20 cm), an NFC mode may be used. When a user of t he smart phone gets in the vehicle, or when the user is close to the vehicle, the s mart phone and the vehicle may perform authentication through NFC and transm it/receive a control signal.

When the distance between the vehicle and the smart phone increa ses, a short-range communication mode, such as BT (e.g., within 10 m) or WiFi (e.g., within 100 m), may be applied. The vehicle and the smart phone may perfo rm communication by selecting one of the short-range communication modes ba sed on a predetermined standard.

In addition, when the distance between the vehicle and the smart p hone exceeds the distance in which the short-range communication mode is avail able, the vehicle and the smart phone perform network-based communication. C ommunication may also be performed between the vehicle and the smart phone t hrough other communication modes in addition to the above described communi cation modes. It should be apparent to those skilled in the art that various comm unication modes can be applied based on a coverage associated with each comm unication mode and the distance between the vehicle and the smart phone.

As described above, the vehicle and the smart phone may perform communication through various communication modes. According to the related art, a separate authentication unit performs an authentication procedure based o n each communication mode, and an authentication result of each authentication unit is not shared with one another and thus, an authentication procedure is repea tedly performed based on a communication mode, which is a drawback typically associated with the related art.

The first electronic device 110 and the second electronic device 15 0 according to various embodiments of the present disclosure, share through eac h authentication unit, an authentication result performed by a separate authentica tion unit, thereby preventing an authentication procedure from being repeatedly performed. In addition, the first electronic device 110 and the second electronic device 150 do not merely share the authentication result, but set the shared authe ntication result to be ascertained through at least one of a common authority and a common security key that are available in each authentication unit, thereby pre venting the security level from being deteriorated.

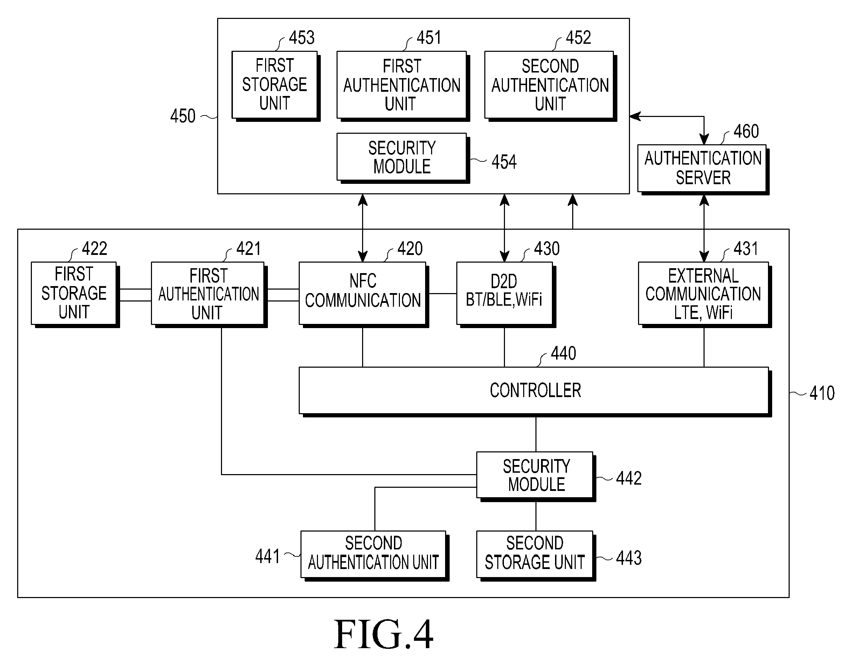

FIG. 4 illustrates various authentication methods performed betwe en a block diagram of a first electronic device and a block diagram of a second e lectronic device according to various embodiments of the present disclosure.

According to various embodiments of the present disclosure, when a second electronic device 450 is authenticated by a first electronic device 410 i rrespective of a communication mode, the second electronic device 450 may obt ain control of the first electronic device 410.

Referring to FIG. 4, the first electronic device 410 and the second electronic device 450 may be connected in a device-to-device (D2D) manner, or may be connected via a server over a network. For example, the first electronic d evice 410 and the second electronic device 450 may be connected in a D2D man ner through NFC, or the first electronic device 410 and the second electronic dev ice 450 may be connected in a D2D manner through short-range communication (e.g., BT or WiFi) excluding NFC provided by module 430. The first electronic device 410 and the second electronic device 450 may also be connected via an e xternal server over WiFi or a network provided by module 431.

Based on each connection mode, different authentication modes m ay be required between the first electronic device 410 and the second electronic device 450. For example, when a connection is established through NFC, authen tication may be performed between a first authentication unit 421 of the first elec tronic device 410 and a first authentication unit 451 of the second electronic devi ce 450. The first authentication unit 421 of the first electronic device 410 and the first authentication unit 451 of the second electronic device 450 may be authenti cation units that perform authentication through NFC.

When a connection is established through short-range communicat ion excluding NFC, authentication may be performed between a second authenti cation unit 441 of the first electronic device 410 and a second authentication unit 452 of the second electronic device 450. The second authentication unit 441 of t he first electronic device 410 and the second authentication unit 452 of the secon d electronic device 450 may be authentication units that perform authentication t hrough the short-range communication excluding NFC.

When a connection is established via an external server, authentica tion may be performed between the external authentication server 460 and the se cond authentication unit 441 of the first electronic device 410 and the second aut hentication unit 452 of the second electronic device 450.

As described above, an authentication unit that performs authentic ation may be changed based on a communication mode. However, when any aut hentication unit performs authentication with respect to the second electronic de vice 450, and the result of the authentication with respect to the second electroni c device 450 is shared by the authentication unit, authentication may be prevente d from being performed repeatedly for each communication mode.

Hereinafter, descriptions will be provided in a case where authenti cation is performed between the first authentication unit 421 of the first electroni c device 410 and the first authentication unit 451 of the second electronic device 450.

The first authentication unit 451 of the second electronic device 45 0 may request, through NFC, the first electronic device 410 to perform authentic ation with respect to the second electronic device 450. The first electronic device 410 receives the request through an NFC communication module 420, and trans fers the request to the first authentication unit 421. The first authentication unit 4 21 may perform authentication with respect to the second electronic device 450 i n response to the request.

When the second electronic device 450 is authenticated, the first a uthentication unit 421 may transmit to the second electronic device 450, first inf ormation stored in a first storage unit 422. The first information may be authenti cation information used for controlling the first electronic device 410. The first a uthentication unit 421 may further transfer at least one of an authority and a secu rity key in association with the first information to the second electronic device 4 50.

The first authentication unit 421 may transfer second information i ndicating that the second electronic device 450 is authenticated to the second aut hentication unit 441. In addition, the first authentication unit 421 may further tra nsfer at least one of an authority and a security key in association with the secon d information, to the second authentication unit 441.

In an embodiment, the first authentication unit 421 may not transfe r the second information via a controller 440, but may transfer the second inform ation through a separate security module 442 that is connected with the second a uthentication unit 441. The security module 442 may be an area that is virtually s et in at least one processor in the first electronic device 410. The second informa tion may also be stored in a second storage unit 443 through the security module 442. As described above, the first authentication unit 421 may transfer the secon d information to the second authentication unit 441 through the separate security module 442 without passing through the controller 440, thereby maintaining sec urity.

The first authentication unit 451 of the second electronic device 45 0 may receive the first information and may store the first information in a first s torage unit 453. The first authentication unit 451 may also transfer third informat ion indicating that the second electronic device 450 is authenticated to the secon d authentication unit 452 of the second electronic device 450. The third informat ion may be transferred through a separate security module 454, without passing t hrough a controller (not illustrated) of the second electronic device 450, in the sa me manner as the second information. As described above, the second electronic device 450 transfers the third information to the second authentication unit 452 t hrough the security module 454, thereby maintaining security.

The second information is transferred to the second authentication unit 441 of the first electronic device 410, and the third information is transferre d to the second authentication unit 452 of the second electronic device 450, resp ectively, and thus, an authentication result is shared. Through the above, when th e second electronic device 450 performs communication with the first electronic device 410 through BT or WiFi, the second electronic device 450 may not reque st separate authentication. When the first electronic device 410 performs commu nication with the second electronic device 450 through BT or WiFi, the first elec tronic device 410 may process a signal received from the second electronic devic e 450, although separate authentication is not performed.

In the above descriptions, although the case in which authenticatio n is performed through the first communication mode has been described, this is merely an example for the purpose of description and embodiments may not be l imited thereto. Even when authentication is performed through the second comm unication mode, an authentication result of each authentication unit is equally sh ared with one another. For example, when the second authentication unit 441 per forms authentication with respect to the second electronic device 450 through th e second communication mode, the second authentication unit 441 may transfer t he second information to the first authentication unit 421. In this instance, infor mation transferred to the second electronic device 450 as the authentication is pe rfonned may be fourth information that is set to be unique to the second commu nication mode. The fourth information may be authentication information that is used for controlling the first electronic device 410, like the first information. The fourth information may be set to be unique to the second communication mode ( e.g., BT or WiFi), unlike the first information.

According to various embodiments of the present disclosure, the se cond authentication unit 441 may consign the authentication with respect to the s econd electronic device 450 to the first authentication unit 421. That is, when a r equest for authentication with respect to the second electronic device 450 is recei ved through the second communication mode, the second authentication unit 441 may transfer the request to the first authentication unit 421. Accordingly, the fir st authentication unit 421 may perform authentication with respect to the second electronic device 450 on behalf of the second authentication unit 441. In this inst ance, the second authentication unit 441 may not be capable of reading informati on associated with authentication, and may only transfer the information to the fi rst authentication unit 421 or the second electronic device 450.

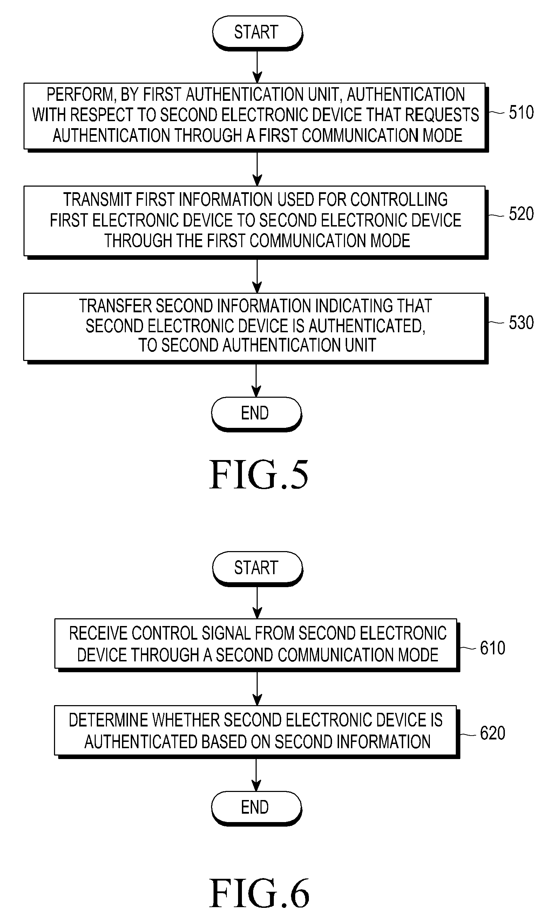

FIG. 5 is a flowchart illustrating an authentication method perform ed by a first electronic device according to various embodiments of the present d isclosure.

Referring to FIG. 5, in operation 510, a first electronic device may perform authentication with respect to a second electronic device that requests a uthentication through the first communication mode. A first authentication unit o f the first electronic device may receive a request for authentication from the sec ond electronic device through the first communication mode, and may perform a uthentication with respect to the second electronic device.

In operation 520, when the second electronic device is authenticate d, the first electronic device may transmit to the second electronic device, first in formation used for controlling the first electronic device through the first commu nication mode.

The first information may be used for directly controlling the first electronic device 110 and thus, the security level of the first information may be set to be high. Therefore, authority is separately required to use the first informat ion. When the first information is encrypted, a separate security key may also be required to ascertain the first information. Accordingly, the first electronic devic e may further transfer to the second electronic device at least one of an authority and a security key in association with the first information.

In operation 530, the first authentication unit of the first electronic device may transfer second information indicating that the second electronic dev ice is authenticated to a second authentication unit that performs authentication t hrough the second communication mode. When an authentication unit for each c ommunication mode is separately included in the first electronic device, each aut hentication unit may need to share an authentication result with one another so th at each authentication unit does not redundantly perform an authentication proce dure. When each authentication unit shares the authentication result, an authentic ation procedure may not be separately performed for each communication mode.

The second information is not information that is directly used for controlling the first electronic device, unlike the first information and thus, the s ecurity level of the second information may be set to be lower than the first infor mation. However, the second information includes information associated with t he second electronic device, an authentication result with respect to the second el ectronic device, and the like, and thus, authority is separately required to use the second information. Accordingly, the first authentication unit may further transfe r an authority or a security key in association with the second information to the second authentication unit, and the second authentication unit may ascertain the second information using the authority or the security key in association with the second information.

FIG. 6 is a flowchart illustrating a method for a first electronic dev ice to process a control signal received through a second communication accordi ng to various embodiments of the present disclosure.

Referring to FIG. 6, in operation 610, after a second electronic dev ice is authenticated through the first communication mode, a first electronic devi ce may receive a control signal from the second electronic device through the se cond communication mode. After the second electronic device is authenticated, t he second electronic device may transmit a control signal for controlling the first electronic device. When the authentication is performed by the first electronic d evice, the second electronic device may transmit the control signal to the first ele ctronic device irrespective of the communication mode.

In operation 620, the first electronic device determines whether the second electronic device is authenticated based on the second information indic ating that the second electronic device is authenticated. When it is determined th at the second electronic device is authenticated, the first electronic device may p erform communication with the second electronic device through the second co mmunication mode.

For example, the first electronic device may process a control sign al that is received from the second electronic device, and may perform an operati on corresponding to the control signal. As described above, although the control signal is received through the second communication mode, which is different fr om the first communication mode through which authentication is performed, th e first electronic device may not perform a separate authentication procedure thr ough the second communication mode, and may determine whether to perform a uthentication with respect to the second electronic device based on the second in formation.

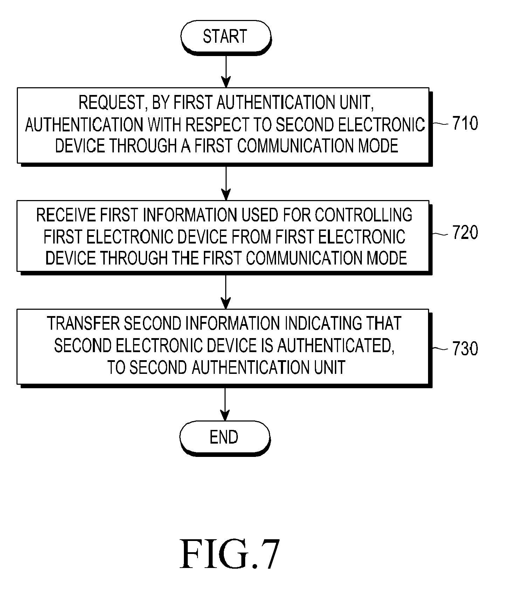

FIG. 7 is a flowchart illustrating an authentication method perform ed by a second electronic device according to various embodiments of the presen t disclosure.

Referring to FIG. 7, in operation 710, a first authentication unit of t he second electronic device may request authentication with respect to a second electronic device through the first communication mode. The first authentication unit may request authentication with respect to the second electronic device so a s to control a first electronic device.

In operation 720, when the second electronic device is authenticate d, the first authentication unit may receive first information used for controlling t he first electronic device from the first electronic device through the first commu nication mode.

The first information may be used for directly controlling the first electronic device and thus, the security level of the first information may be set t o be high. Therefore, authority is separately required to use the first information. When the first information is encrypted, a separate security key may also be req uired to ascertain the first information. Accordingly, the first authentication unit may further receive at least one of an authority and a security key in association with the first information.

In operation 730, the first authentication unit of the second electro nic device may transfer second information indicating that the second electronic device is authenticated to a second authentication unit of the second electronic d evice. When an authentication unit for each communication mode is separately i ncluded in the second electronic device, each authentication unit may need to sh are an authentication result with one another so that each authentication unit doe s not redundantly perform an authentication procedure. When each authenticatio n unit shares the authentication result, an authentication procedure may not be se parately performed for each communication mode.

The second information includes information associated with the s econd electronic device, an authentication result in association with the second e lectronic device, and the like, and thus, authority is separately required to use the second information. Accordingly, the first authentication unit may further transf er to the second authentication unit at least one of an authority and a security key in association with the second information.

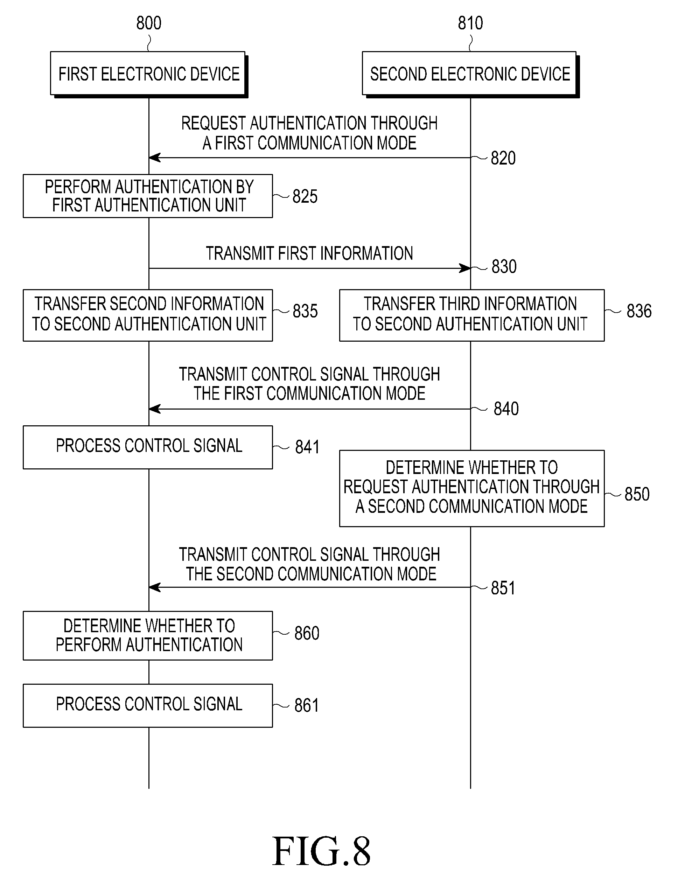

FIG. 8 is a flowchart illustrating an authentication method perform ed between a first electronic device and a second electronic device, and a control signal processing method, according to various embodiments of the present disc losure.

Referring to FIG. 8, a method for performing authentication betwe en a first electronic device 800 and a second electronic device 810, and a method of processing a control signal after the authentication, will be described.

In operation 820, the second electronic device 810 requests, throug h the first communication mode, the first electronic device 800 to perform authe ntication with respect to the second electronic device 810. The second electronic device 810 needs to be authenticated by the first electronic device 800 before tra nsmitting a control signal to control the first electronic device 800. Accordingly, the second electronic device 810 transmits a request for authentication to the firs t electronic device 800.

In operation 825, a first authentication unit of the first electronic de vice 800 may perform authentication with respect to the second electronic device 810. The first authentication unit of the first electronic device may receive a req uest for authentication from the second electronic device through the first comm unication mode, and may perform authentication with respect to the second elect ronic device.

In operation 830, when the second electronic device 810 is authent icated, the first authentication of the first electronic device 800 may transmit first information used for controlling the first electronic device 800 to the second ele ctronic device 810 through the first communication mode. The first authenticatio n unit of the first electronic device 800 may further transfer at least one of an aut hority and a security key in association with the first information to the second el ectronic device 810.

In operation 835, the first authentication unit of the first electronic device 800 may transfer second information indicating that the second electronic device is authenticated to a second authentication unit of the first electronic devi ce 800, which performs authentication through the second communication mode. When an authentication unit for each communication mode is separately include d in the first electronic device, each authentication unit may need to share an aut hentication result with one another so that each authentication unit does not redu ndantly perform an authentication procedure. The first authentication unit may f urther transfer an authority or a security key in association with the second infor mation to the second authentication unit, and the second authentication unit may ascertain the second information using the authority or the security key in associ ation with the second information.

In operation 836, a first authentication unit of the second electronic device 810 may transfer third information indicating that the second electronic d evice 810 is authenticated to a second authentication unit of the second electroni c device 810.

The third information includes information associated with the sec ond electronic device, an authentication result in association with the second ele ctronic device, and the like, and thus, authority is separately required to use the t hird information. Accordingly, the first authentication unit of the second electron ic device may further transfer to the second authentication unit of the second ele ctronic device at least one of an authority and a security key in association with t he third information.

In operation 840, the second electronic device 810 transmits a cont rol signal to the first electronic device 800 through the first communication mod e. In operation 841, the first electronic device 800 may process the received cont rol signal. For example, the first electronic device 800 may perform an operation corresponding to the received control signal.

In operation 850, the second electronic device 810 may determine whether to request authentication through the second communication mode. Wh en the second electronic device 810 transmits a control signal to the first electron ic device 800 through the second communication mode, which is different from t he first communication mode through which authentication is performed, the sec ond electronic device 810 may determine whether to request authentication throu gh the second communication mode. For example, the second electronic device 810 may determine whether to request authentication based on third information that is transferred to the second authentication unit. The second electronic device 810 may determine, from the third information, that the second electronic devic e 810 is authenticated by the first electronic device 800 using at least one of an a uthority and a security key associated with the second information.

In operation 851, the second electronic device 810 transmits a cont rol signal to the first electronic device 800 through the second communication m ode. The second electronic device 810 determines that the second electronic devi ce 810 is authenticated by the first electronic device 800 based on the third infor mation and accordingly, may not request authentication through the second com munication mode.

In operation 860, the first electronic device 800 receives a control s ignal through the second communication mode, and determines whether to perfo rm authentication with respect to the second electronic device 810 before proces sing the control signal. The first electronic device 800 determines that the second electronic device 810 is authenticated based on the second information transferr ed to the second authentication unit.

In operation 861, when it is determined that the second electronic d evice 810 is authenticated, the first electronic device 800 processes the received control signal.

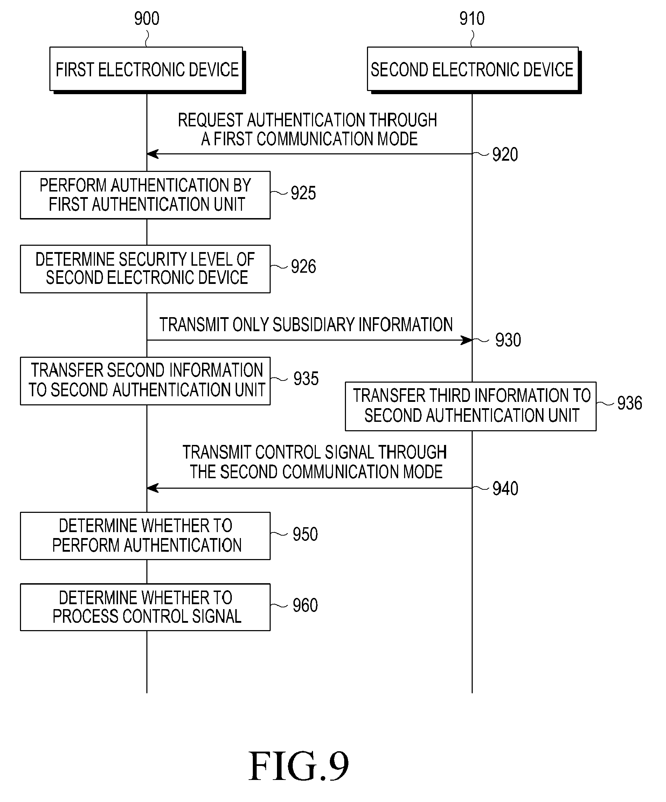

FIG. 9 is a flowchart illustrating an authentication method perform ed between a first electronic device and a second electronic device, and a control signal processing method, according to various embodiments of the present disc losure.

Referring to FIG. 9, a method for controlling a control signal is des cribed in a case where only subsidiary information is transmitted among core inf ormation and subsidiary information included in a first information in the authen tication performed between a first electronic device 900 and a second electronic device 910.

In operation 920, the second electronic device 910 requests, throug h the first communication mode, the first electronic device 900 to perform authe ntication with respect to the second electronic device 910.

In operation 925, a first authentication unit of the first electronic de vice 900 may perform authentication with respect to the second electronic device 910.

In operation 926, a first authentication unit of the first electronic de vice 900 may determine the security level of the second electronic device 910 ba sed on a result of the authentication. For example, the first authentication unit of the first electronic device 900 determines the security level of the second electro nic device 910, which is set in advance, or may determine the security level of th e second electronic device 910 using authentication information received from th e second electronic device 910 in the authentication process.

In operation 930, when the security level of the second electronic d evice 910 is set to be lower than a security level that allows the reception of the c ore information, or when authentication information corresponding to the securit y level that allows reception of the core information is not received from the sec ond electronic device 910 in the authentication process, the first authentication u nit of the first electronic device 900 transmits to the second electronic device 91 0 only the subsidiary information, excluding the core information.

In operation 935, the first authentication unit of the first electronic device 900 may transfer second information indicating that the second electronic device is authenticated to a second authentication unit of the first electronic devi ce 900, which performs authentication through the second communication. For e xample, when only the subsidiary information is transmitted to the second electr onic device 910, the first authentication unit of the first electronic device 900 ma y transmit to the second authentication unit of the first electronic device 900, sec ond information including state information indicating that only the subsidiary in formation is transmitted.

In operation 936, a first authentication unit of the second electronic device 910 may transfer third information indicating that the second electronic d evice 910 is authenticated to a second authentication unit of the second electroni c device 910. For example, when only the subsidiary information is transmitted f rom the first electronic device 900, the first authentication unit of the second ele ctronic device 910 may transfer to the second authentication unit of the second el ectronic device 910, third information including state information indicating that only the subsidiary information is received.

When only the subsidiary information is received, the second elect ronic device 910 may determine that the second electronic device 910 is not auth orized to control a core component or system of the first electronic device 900. Accordingly, the second electronic device 910 does not generate a control signal, or when a control signal is generated, the second electronic device 910 may not transmit the control signal to the first electronic device 900. In this instance, alth ough the second electronic device 910 transmits the control signal to the first ele ctronic device 900, the first electronic device 900 may not process the control si gnal. Hereinafter, descriptions will be provided for an example where the second electronic device 910 transmits the control signal to the first electronic device 9 00.

In operation 940, the second electronic device 910 transmits a cont rol signal to the first electronic device 900 through the second communication m ode.

In operation 950, the first electronic device 900 receives a control s ignal through the second communication, and determines whether to perform aut hentication with respect to the second electronic device 910 before processing th e control signal. The first electronic device 900 determines that the second electr onic device 910 is authenticated based on the second information transferred to t he second authentication unit.

In operation 960, the first electronic device 900 determines whethe r to process the received control signal. The first electronic device 900 may deter mine that the second electronic device 910 is not authorized to control a compon ent or a system associated with driving the first electronic device 110, based on t he second information transferred to the second authentication unit. Accordingly , the first electronic device 900 may not process the control signal received from the second electronic device 150.

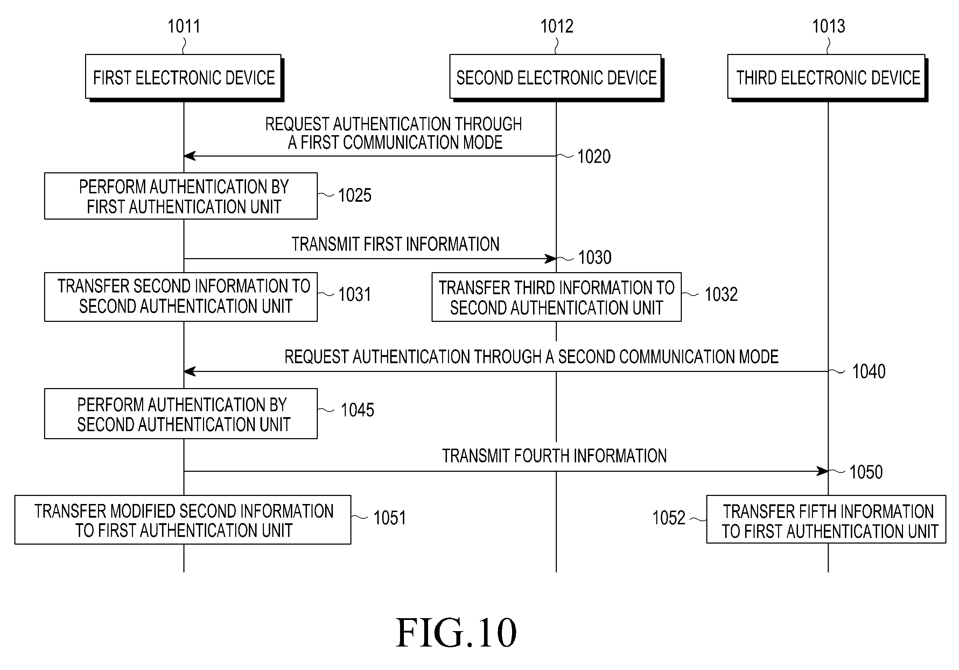

FIG. 10 is a flowchart illustrating an authentication method perfor med among a first electronic device, a second electronic device, and a third elect ronic device according to various embodiments of the present disclosure.

Referring to FIG. 10, a method is described in which a second elec tronic device 1012 and a third electronic device 1013 perform authentication wit h a first electronic device 1011 using different communication modes.

In operation 1020, the second electronic device 1012 requests the f irst electronic device 1011 to perform authentication through the first communic ation mode.

In operation 1025, a first authentication unit of the first electronic device 1011 performs authentication with respect to the second electronic device 1012 in response to the request for authentication that is received from the seco nd electronic device 1012.

In operation 1030, the first authentication unit of the first electroni c device 1011 transmits to the second electronic device 1012 first information us ed for controlling the first electronic device 1011.

In operation 1031, the first authentication unit of the first electroni c device 1011 transfers second information indicating that the second electronic device 1012 is authenticated to a second authentication unit of the first electronic device 1011. Through the above, the first authentication unit may share with the second authentication unit the information indicating that the second electronic device 1012 is authenticated by transferring the second information.

In operation 1032, a first authentication unit of the second electron ic device 1012 transfers third information indicating that the second electronic d evice 1012 is authenticated to a second authentication unit of the second electron ic device 1012. Through the above, the first authentication unit may share, with t he second authentication unit, the information indicating that the second electron ic device 1012 is authenticated by transferring the third information. Accordingl y, the second electronic device 1012 may transmit a control signal to the first ele ctronic device 1011 irrespective of a communication mode, and the first electron ic device 1011 may process the control signal irrespective of a communication m ode through which the control signal is transmitted.

In operation 1040, a first authentication unit of the third electronic device 1013 requests the first electronic device 1011 to perform authentication th rough the second communication mode.

In operation 1045, the second authentication unit of the first electr onic device 1011 performs authentication with respect to the third electronic dev ice 1013 in response to the request for authentication that is received from the thi rd electronic device 1013.

In operation 1050, the second authentication unit of the first electr onic device 1011 transmits to the third electronic device 1013 first information u sed for controlling the first electronic device 1011.

In operation 1051, the second authentication unit of the first electr onic device 1011 transfers modified second information indicating that the third electronic device 1013 is authenticated to the second authentication unit of the fi rst electronic device 1011. When the third electronic device 1013 is authenticate d, the second authentication unit may modify the second information that is trans ferred from the first authentication unit so as to indicate that the third electronic device 1013 is authenticated. Also, the second authentication unit generates infor mation indicating that the third electronic device 1013 is authenticated and transf ers the information to the first authentication unit. Through the above, the secon d authentication unit may share with the first authentication unit the information indicating that the third electronic device 1013 is authenticated.

In operation 1052, a second authentication unit of the third electro nic device 1013 may transfer fourth information indicating that the third electron ic device 1013 is authenticated to the first authentication unit of the third electro nic device 1013. Through the above, the second authentication unit may share wi th the first authentication unit the information indicating that the third electronic device 1013 is authenticated by transferring the fourth information. Accordingly, the third electronic device 1013 may transmit a control signal to the first electro nic device 1011 irrespective of a communication mode, and the first electronic d evice 1011 may process the control signal irrespective of a communication mode through which the control signal is transmitted.

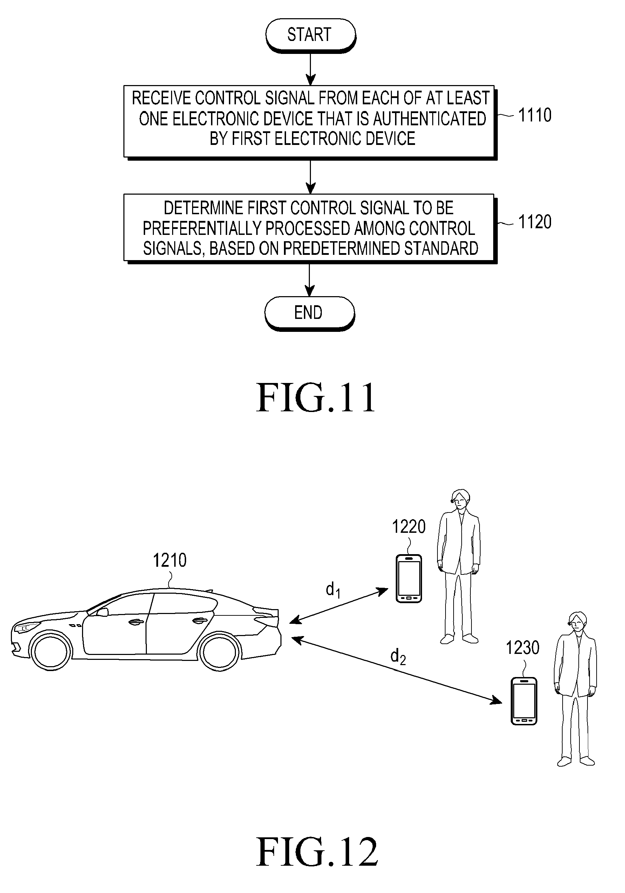

FIG. 11 is a flowchart illustrating a method for a first electronic de vice to process a plurality of control signals according to various embodiments o f the present disclosure.

Referring to FIG. 11, in operation 1110, a first electronic device re ceives a control signal from each of at least one electronic device that is authenti cated by the first electronic device. For example, when a plurality of electronic d evices exist that are authenticated by the first electronic device, control signals m ay be received simultaneously from the plurality of electronic devices.

In operation 1120, the first electronic device determines a control s ignal to be preferentially processed among the received control signals based on a predetermined standard. When a plurality of control signals are received, the fi rst electronic device may not process all of the control signals.

For example, when the first electronic device is a vehicle or an ele ctronic device that is included in the vehicle to control the vehicle, the received c ontrol signals may indicate operations that contradict each other. One control sig nal may indicate an instruction to start the ignition, and another control signal m ay indicate an instruction to turn off the ignition. As described above, when a plu rality of control signals are received, the first electronic device may not process all of the control signals and thus, may determine a signal to be preferentially pr ocessed based on a predetermined standard. For example, the first electronic dev ice may determine the preferential signal based on an order of control signals rec eived from a plurality of electronic devices. When a first control signal and a sec ond control signal are received sequentially, the first electronic device preferenti ally processes the first control signal, and subsequently processes the second con trol signal, if at all.

A detailed method of determining the preferential signal based on a predetermined standard will be described with reference to FIGS. 12 to 15. Ho wever, the method of determining the preferential control signal described with r eference to FIGS. 12 to 15, is merely an example for the purpose of description, and embodiments of the present disclosure may not be limited thereto. When a p lurality of signals are received based on user's setting or various methods, it sho uld be apparent to those skilled in the art that various methods of determining a c ontrol signal to be preferentially processed are applicable.

FIG. 12 is a diagram illustrating a method for a first electronic devi ce to process a plurality of control signals based on a distance according to vario us embodiments of the present disclosure.

Referring to FIG. 12, a method is described for a first electronic de vice 1210 to determine a control signal to be preferentially processed out of recei ved control signals based on a distance to a first electronic device 1210.

The first electronic device 1210 performs authentication with a sec ond electronic device 1220 and a third electronic device 1230 through first com munications, and receives a control signal through the first communications fro m each of the second electronic device 1220 and the third electronic device 1230 . In this instance, the first electronic device 1210 may determine the control sign al to be preferentially processed out of the received control signals based on the distance from each of the second electronic device 1220 and the third electronic device 1230 to the first electronic device 1210.

To determine the preferential control signal, the first electronic dev ice 1210 may determine the locations of the second electronic device 1220 and t he third electronic device 1230. For example, the first electronic device 1210 ma y determine the distance between the first electronic device 1210 and the second electronic device 1220, and the distance between the first electronic device 1210 and the third electronic device 1230, using the received control signals.

By comparing the distances, the first electronic device 1210 may d etermine an electronic device that is closer to the first electronic device 1210, am ong the second electronic device 1220 and the third electronic device 1230. For example, descriptions will be provided for the example where a distance (d1) bet ween the second electronic device 1220 and the first electronic device 1210 is sh orter than a distance (d2) between the third electronic device 1230 and the first e lectronic device 1210.

The first electronic device 1210 may compare the distance (d1) bet ween the second electronic device 1220 and the first electronic device 1210 and t he distance (d2) between the third electronic device 1230 and the first electronic device 1210, and may determine that the second electronic device 1220 is closer to the first electronic device 1210 than the third electronic device 1230 based on a result of the comparison. Any number of signal processing technologies can be used to determine distances (d1) and (d2) as known to those skilled in the art, th erefore additional details are omitted.

Accordingly, the first electronic device 1210 determines a control s ignal received from the second electronic device 1220 as the preferential control signal, and processes the control signal received from the second electronic devi ce 1220 rather than a control signal received from the third electronic device 123 0. In an embodiment, the control signal received from the third electronic device 1230 may or may not be subsequently processed after processing the control sig nal received from the second electronic device 1220.

For example, when the second electronic device 1220 is authentica ted by the first electronic device 1210, and a user of the second electronic device 1220 starts the ignition through the second electronic device 1220 and drives the first electronic device 1210, a user of the third electronic device 1230 may trans mit a control signal indicating an instruction to turn off the ignition of the first el ectronic device 1210 from the outside of the first electronic device 1210. In this i nstance, the first electronic device 1210 may not subsequently process the contro 1 signal received from the third electronic device 1230.

When the second electronic device 1220 and the third electronic de vice 1230 are authenticated by the first electronic device 1210 based on an identi cal communication mode and an identical security level, the first electronic devi ce 1210 may determine the preferential control signal based on the distance as de scribed above. Here, an identical security level indicates that information that the second electronic device 1220 and the third electronic device 1230 provide for t he authentication by the first electronic device 1210 are at the same level.

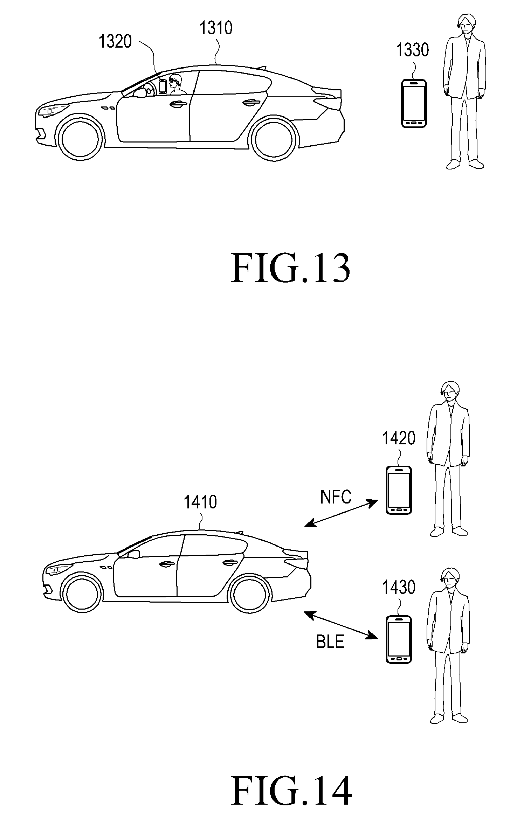

FIG. 13 is a diagram illustrating a method for a first electronic devi ce to process a plurality of control signals based on a security level according to various embodiments of the present disclosure.

Referring to FIG. 13, a method is described for a first electronic de vice 1310 to determine as a control signal to be preferentially processed, a contr ol signal received from an electronic device that inputs information correspondin g to a higher security level.

In this case, a control signal received from a third electronic device 1330 that is farther from the first electronic device 1310 may need to be prefere ntially processed relative to a control signal received from a second electronic de vice 1320 that is closer to the first electronic device 1310. For example, in the ca se in which the first electronic device 1310 is stolen, the first electronic device 1 310 needs to be controlled from outside the first electronic device 1310, althoug h a driver exists. In this instance, when the authentication is performed with the f irst electronic device 1310 by providing the first electronic device 1310 with inf ormation having a higher security level than information that the driver provides to the first electronic device 1310 in the authentication process through the secon d electronic device 1320, the first electronic device 1310 may preferentially proc ess a control signal received from the third electronic device 1330.

For example, when the driver performs authentication with the first electronic device 1310 using information associated with a personal identificati on number (PIN) of the second electronic device 1320 through NFC, a user of th e third electronic device 1330 may establish a connection with the first electroni c device 1310 through an LTE network, WiFi direct, or the like, and may perfor m authentication with the first electronic device 1310 using the information asso ciated with a fingerprint and the PIN. When the third electronic device 1330 pro vides information that is set as information having a higher security level than th e second electronic device 1320, a control signal received from the third electron ic device 1330 may be preferentially processed relative to a control signal receiv ed from the second electronic device 1320.

In this instance, in the case of theft, by performing authentication b ased on the information with a higher security level, driving of the first electroni c device 1310 may be remotely controlled.

FIG. 14 is a diagram illustrating a method for a first electronic devi ce to process a plurality of control signals based on a communication mode acco rding to various embodiments of the present disclosure.

Referring to FIG. 14, a method is described for a first electronic de vice 1410 to determine a control signal to be preferentially processed out of recei ved control signals based on a communication mode through which authenticatio n is performed.

Descriptions will be provided in a case where the first electronic d evice 1410 performs authentication with a second electronic device 1420 throug h NFC, and the first electronic device 1410 performs authentication with a third electronic device 1430 through BLE. In this instance, the first electronic device 1410 may take into consideration a communication mode through which authent ication is performed when determining the preferential control signal. For examp le, it may be set that priority is given to a communication mode that is executabl e over a short distance. It may also be set that preference is given to NFC over ot her short-range communication modes, and/or preference is given to a short-rang e communication mode over a network-based communication mode.

In this instance, the first electronic device 1410 may determine, as the preferential control signal, a control signal received from the second electron ic device 1420 out of control signals received from the second electronic device 1420 and the third electronic device 1430. As described above, the first electroni c device 1410 may determine the preferential control signal based on predetermi ned priorities of communication modes.

When the first electronic device 1410 receives requests for authent ication from the second electronic device 1420 and the third electronic device 14 30 from a distance where all of NFC, BLE, and WiFi are possible, the first electr onic device 1410 may lead authentication to be performed through NFC, which i s a communication mode having a highest priority.

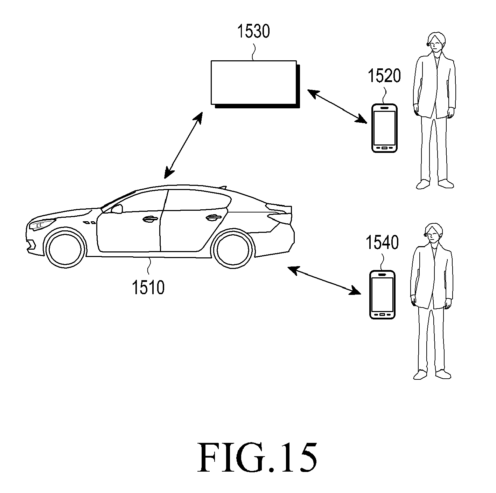

FIG. 15 is a diagram illustrating a method for a first electronic devi ce to process a plurality of control signals based on an authentication method acc ording to various embodiments of the present disclosure.

Referring to FIG. 15, a method is described for a first electronic de vice 1510 to determine a control signal to be preferentially processed out of recei ved control signals based on an authentication method of each of a second electr onic device 1520 and a third electronic device 1540.

Descriptions will be provided where, for example, the second elect ronic device 1520 performs authentication with the first electronic device 1510 t hrough an external authentication server 1530, and the third electronic device 15 40 performs authentication with the first electronic device 1510 in a D2D manne r.

In this instance, the security level of the second electronic device 1 520 that performs authentication through the external authentication server 1530 is set to be higher, and the security level of the third electronic device 1540 that performs authentication in a D2D manner is set to be lower. Generally, when aut hentication is performed through the external authentication server 1530, the sec urity is higher than a D2D authentication method and thus, the security level ma y be set as described above. However, this is merely an example for the purpose of description, and embodiments may not be limited thereto and the security leve 1 may be variously set based on user's setting.

The first electronic device 1510 may determine as a preferential co ntrol signal, a control signal received from the second electronic device 1520 tha t performs authentication through the external authentication server 1530 with a higher security level. Accordingly, the first electronic device 1510 may preferent ially process a control signal received from the second electronic device 1520 rat her than a control signal received from the third electronic device 1540.

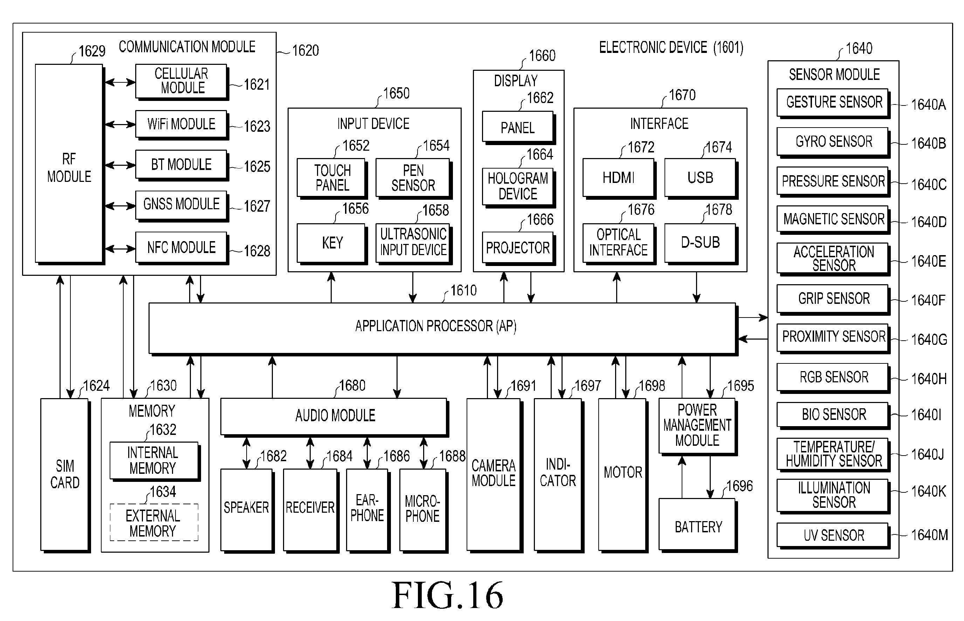

FIG. 16 is a block diagram of an electronic device according to var ious embodiments of the present disclosure.

An electronic device 1601 may include a part or entirety of the ele ctronic device 110 or the second electronic device 150 illustrated in FIG. 1. The electronic device 1601 includes at least one processor 1610 (e.g., an AP), a com munication module 1620, a subscriber identification module 1624, a memory 16 30, a sensor module 1640, an input device 1650, a display 1660, an interface 167 0, an audio module 1680, a camera module 1691, a power management module 1695, a battery 1696, an indicator 1697, and a motor 1698.

Referring to FIG. 16, the processor 1610 may control a plurality of hardware or software components connected to the processor 1610 by driving a n OS or an application program, and may perform processing of various pieces o f data and calculations. The processor 1610 may be embodied as, for example, a system on chip (SoC). According to an embodiment of the present disclosure, th e processor 1610 may further include a graphics processing unit (GPU) and/or a n image signal processor (ISP). The processor 1610 may also include at least so me (e.g., a cellular module 1621) of the components illustrated in FIG. 16. The p rocessor 1610 may load, into a volatile memory, instructions or data received fro m at least one (e.g., a non-volatile memory) of the components and may process the loaded instructions or data, and may store various data and processing results in a non-volatile memory.

The communication module 1620 may have a configuration substa ntially identical or similar to that of the communication interface of FIG. 1. The communication module 1620 may include, for example, the cellular module 162 1, a WiFi module 1623, a BT module 1625, a GNSS module 1627 (e.g., a GPS module, Glonass module, Beidou module, or Galileo module), an NFC module 1 628, and a radio frequency (RF) module 1629.

The cellular module 1621 may provide a voice call, video call, text message service, Internet service, or the like through, for example, a communic ation network. According to an embodiment of the present disclosure, the cellula r module 1621 may distinguish and authenticate the electronic device 1601 withi n a communication network using a subscriber identification module (e.g., the su bscriber identification module (SIM) card 1624). According to an embodiment o f the present disclosure, the cellular module 1621 may perform at least some of t he functions that the processor 1610 may provide. According to an embodiment of the present disclosure, the cellular module 1621 may include a CP.

The WiFi module 1623, BT module 1625, GNSS module 1627, or NFC module 1628 may include, for example, a separate processor that processes data transmitted and received through a corresponding module. According to an embodiment of the present disclosure, at least some (e.g., two or more) of the cel lular module 1621, WiFi module 1623, BT module 1625, GNSS module 1627, a nd NFC module 1628 may be included in a single integrated chip (IC) or IC pac kage.

The RF module 1629 may transmit/receive, for example, a commu nication signal (e.g., an RF signal). The RF module 1629 may include, for exam ple, a transceiver, power amp module (PAM), frequency filter, low noise amplifi er (LNA), antenna, or the like. According to another embodiment of the present disclosure, at least one of the cellular module 1621, WiFi module 1623, BT mod ule 1625, GNSS module 1627, and NFC module 1628 may transmit and receive RF signals through a separate RF module.

The subscriber identification module 1624 may include, for examp le, a card including a subscriber identity module and/or an embedded SIM, and may contain unique identification information (e.g., an integrated circuit card ide ntifier (ICCID)) or subscriber information (e.g., an international mobile subscrib er identity (IMSI)).

The memory 1630 (e.g., the storage unit 183) may include, for exa mple, an embedded or internal memory 1632 and/or an external memory 1634. T he embedded memory 1632 may include at least one of, for example, a volatile memory (e.g., a dynamic random access memory (DRAM), static RAM (SRAM ), synchronous DRAM (SDRAM), and the like) and a non-volatile memory (e.g., a one-time programmable read only memory (OTPROM), PROM, erasable and programmable ROM (EPROM), electrically EPROM (EEPROM), mask ROM, f lash ROM, flash memory (e.g., a NAND flash memory or NOR flash memory), hard driver, or solid state drive (SSD).

The external memory 1634 may further include a flash drive, for e xample, a compact flash (CF), secure digital (SD), micro-SD, mini-SD, extreme digital (xD), multi-media card (MMC), memory stick, or the like. The external memory 1634 may be functionally and/or physically connected to the electronic device 1601 through various interfaces.

The sensor module 1640 may measure a physical quantity or detect an operation state of the electronic device 1601, and may convert the measured or detected information into an electrical signal. The sensor module 1640 may in clude, for example, at least one of a gesture sensor 1640A, a gyro sensor 1640B, an atmospheric pressure sensor 1640C, a magnetic sensor 1640D, an acceleratio n sensor 1640E, a grip sensor 1640F, a proximity sensor 1640G, a color sensor 1 640H (e.g., a red, green, blue (RGB) sensor), a biometric sensor 1640I, a temper ature/humidity sensor 1640J, an illumination sensor 1640K, and an ultraviolet ( UV) sensor 1640M. Additionally or alternatively, the sensor module 1640 may i nclude, for example, an E-nose sensor, electromyography (EMG) sensor, electro encephalogram (EEG) sensor, electrocardiogram (ECG) sensor, infrared (IR) sen sor, iris sensor, and/or fingerprint sensor. The sensor module 1640 may further i nclude a control circuit for controlling one or more sensors included therein. In v arious embodiments of the present disclosure, an electronic device 1601 may fur ther include a processor configured to control the sensor module 1640 as a part o f, or separately from, the processor 1610, and may control the sensor module 16 40 while the processor 1610 is in a sleep state.

The input device 1650 may include, for example, a touch panel 16 52, a (digital) pen sensor 1654, a key 1656, or an ultrasonic input device 1658. T he touch panel 1652 may use at least one of, for example, a capacitive mode, resi stive mode, infrared mode, and ultrasonic mode. Further, the touch panel 1652 m ay further include a control circuit. The touch panel 1652 may further include a t actile layer and provide a tactile reaction to a user.

The (digital) pen sensor 1654 may include, for example, a recognit ion sheet which is a part of a touch panel or is separated from a touch panel. The key 1656 may include, for example, a physical button, optical key or keypad. Th e ultrasonic input device 1658 may detect ultrasonic waves generated by an inpu t tool through a microphone and determine data corresponding to the detected ult rasonic waves.

The display 1660 may include a panel 1662, a hologram device 16 64, or a projector 1666. The panel 1662 may be embodied to be, for example, fle xible, transparent, impact resistant, wearable, or a combination thereof. The pane 1 1662 and the touch panel 1652 may be embodied as one module. The hologram 1664 may show a three dimensional image in the air by using an interference of light. The projector 1666 may display an image by projecting light onto a screen. The screen may be located, for example, inside or outside the electronic device 1601. According to an embodiment of the present disclosure, the display 1660 m ay further include a control circuit for controlling the panel 1662, hologram devi ce 1664, or projector 1666.

The interface 1670 may include, for example, an HDMI 1672, a U SB 1674, an optical interface 1676, or a D-subminiature (D-sub) 1678. Addition ally or alternatively, the interface 1670 may include, for example, a mobile high-definition link (MHL) interface, SD card/MMC interface, or infrared data associ ation (IrDA) standard interface.

The audio module 1680 may bilaterally convert, for example, a sou nd and an electrical signal. At least some components of the audio module 1680 may be included in, for example, an input/output interface. The audio module 16 80 may process sound information that is input or output through, for example, a speaker 1682, a receiver 1684, earphones 1686, microphone 1688, or the like.

For example, the camera module 1691 is a device that may photogr aph a still image and a dynamic image. According to an embodiment of the prese nt disclosure, the camera module 1691 may include one or more image sensors ( e.g., a front sensor or a back sensor), a lens, an ISP or a flash (e.g., LED or xeno n lamp).

The power management module 1695 may manage, for example, p ower of the electronic device 1601. According to an embodiment of the present disclosure, the power management module 1695 may include a power managem ent IC (PMIC), a charger IC, or a battery or fuel gauge. The PMIC may use a wir ed and/or wireless charging method. Examples of a wireless charging method m ay include, for example, a magnetic resonance method, magnetic induction meth od, electromagnetic wave method, acoustic method, and the like. Additional circ uits (e.g., a coil loop, resonance circuit, rectifier, and the like) for wireless chargi ng may be further included. The battery gauge may measure, for example, a resi dual quantity of the battery 1696, and a voltage, current, or temperature during c harging. The battery 1696 may include, for example, a rechargeable battery and/ or a solar battery.

The indicator 1697 may indicate a particular state (e.g., a booting s tate, message state, charging state, or the like) of the electronic device 1601 or a part (e.g., the processor 1610) of the electronic device 1601. The motor 1698 ma y convert an electrical signal into mechanical vibration, and may generate vibrati on, haptic effects, or the like. Although not illustrated, the electronic device 160 1 may also include a processing device (e.g., a GPU) for supporting a mobile TV . The processing device for supporting the mobile TV may, for example, process media data according to a certain standard such as digital multimedia broadcasti ng (DMB), digital video broadcasting (DVB), mediaFLO^{™}, or the like.

Each of the above-described component elements of hardware acc ording to the present disclosure may be configured with one or more component s, and the names of the corresponding component elements may vary based on th e type of electronic device. The electronic device according to various embodim ents of the present disclosure may include at least one of the aforementioned ele ments. Some elements may be omitted or other additional elements may be furth er included in the electronic device. Also, some of the hardware components acc ording to various embodiments may be combined into one entity, which may per form functions identical to those of the relevant components before the combinat ion.

The term "module" as used herein may, for example, mean a unit i ncluding one of hardware, software, firmware or a combination of two or more t hereof. The term "module" may be interchangeably used with, for example, the t erm "unit", "logic", "logical block", "component", or "circuit". A "module" may be a minimum unit of an integrated component element or a part thereof. A "mo dule" may also be a minimum unit for performing one or more functions or a par t thereof. In each case, the "module" may be mechanically and/or electronically i mplemented. For example, a "module" according to embodiments of the present disclosure may include at least one of an application-specific integrated circuit ( ASIC) chip, field-programmable gate array (FPGA), and programmable-logic de vice for performing operations, which are known or are to be developed.

According to various embodiments, at least some of the devices (e. g., modules or functions thereof) or the methods (e.g., operations) according to t he present disclosure may be implemented by a command stored in a non-transit ory, computer-readable storage medium in a programming module form. When a command is performed by a processor (e.g., when a command is performed by t he controller 140 of the first electronic device or the controller 180 of the second electronic device), the at least one processor may perform a function correspond ing to the command. The non-transitory, computer-readable storage medium ma y be, for example, the first storage unit 131 of the first electronic device, the sec ond storage unit 143 of the first electronic device, the first storage unit 171 of th e second electronic device, and/or the second storage unit 183 of the second elec tronic device.

The computer readable recoding medium may include a hard disk, floppy disk, magnetic media (e.g., a magnetic tape), optical media (e.g., a compa ct disc ROM (CD-ROM) and DVD), magneto-optical media (e.g., a floptical dis k), hardware device (e.g., a ROM, RAM, flash memory), and the like. In additio n, the program instructions may include high class language codes, which can be executed in a computer by using an interpreter, as well as machine codes made by a compiler. The aforementioned hardware devices may be configured to oper ate as one or more software modules in order to perform the operation of the pre sent disclosure, and vice versa.

The programming modules according to the present disclosure ma y include one or more of the aforementioned components or may further include other additional components, or some of the aforementioned components may be omitted. Operations executed by a module, programming module, or other com ponent elements according to various embodiments of the present disclosure ma y be executed sequentially, in parallel, repeatedly, or in a heuristic manner. Furth er, some operations may be executed according to another order or may be omitt ed, or other operations may be added.

According to various embodiments of the present disclosure, there is provided a storage medium that stores instructions, wherein the instructions ar e set to enable at least one processor to execute at least one operation when the i nstructions are executed by the one or more processors, the one or more operatio ns including performing by a first authentication unit through a first communicat ion, authentication with respect to a second electronic device that requests authe ntication and when the second electronic device is authenticated, transmitting fir st information used for controlling the first electronic device to the second electr onic device through the first communication and transferring second information indicating that the second electronic device is authenticated to a second authenti cation unit in the first electronic device, wherein the second authentication unit p erforms authentication through a second communication.

While the present disclosure has been shown and described with re ference to various embodiments thereof, it will be understood by those skilled in the art that various changes in form and detail may be made therein without depa rting from the spirit and scope of the present disclosure as defined by the append ed claims and their equivalents.

## Claims

1. A first electronic device that executes authentication, the first electronic device comprising:
a first authentication unit configured to perform authentication with respect to a second electronic device that requests authentication through a first communication mode; and
a second authentication unit configured to perform authentication through a second communication mode,
wherein the first authentication unit is further configured to:
transmit first information used for controlling the first electronic device to the second electronic device through the first communication mode when the second electronic device is authenticated, and
transferring second information indicating that the second electronic device is authenticated to the second authentication unit.

2. The first electronic device of claim 1, wherein the first authentication unit is further configured to transmit at least one of an authority and a security key in association with the first information to the second electronic device through the first communication mode.

3. The first electronic device of claim 1, wherein the first authentication unit is further configured to transfer at least one of an authority and a security key in association with the second information to the second authentication unit, and
wherein the second authentication unit is further configured to ascertain the second information using at least one of the authority and the security key in association with the second information in a secure area that is virtually set in the first electronic device.

4. The first electronic device of claim 1, further comprising:
a controller configured to determine whether the second electronic device is authenticated based on the second information that is transferred to the second authentication unit when a control signal is received from the second electronic device through the second communication mode.

5. The first electronic device of claim 4, wherein the controller is further configured to perform communication with the second electronic device through the second communication mode when it is determined that the second electronic device is authenticated.

6. The first electronic device of claim 1, wherein each of the first authentication unit and the second authentication unit is further configured to perform authentication with respect to the second electronic device using an external authentication server.

7. The first electronic device of claim 1, wherein the second information is included in state information for operating the first electronic device.

8. The first electronic device of claim 1, further comprising:
a first hardware module including the first authentication unit, a first communication unit configured to perform communication through the first communication mode, and a first storage unit configured to store the first information.

9. The first electronic device of claim 1, further comprising:
a controller configured to:
receive a control signal from each of at least one electronic device that is authenticated by the first electronic device,
determine a control signal to be preferentially processed among the received control signals based on a predetermined standard, and
process the determined control signal.

10. The first electronic device of claim 9, wherein the predetermined standard comprises at least one of:
a distance between each of the at least one electronic device and the first electronic device,
a security level of authentication performed between each of the at least one electronic device and the first electronic device,
a communication mode used for authentication performed between each of the at least one electronic device and the first electronic device,
a communication connection state of each of the at least one electronic device, and
an order of a control signal received from each of the at least one electronic device.

11. A method for performing authentication in a first electronic device, the method comprising:
performing, by a first authentication unit in the first electronic device, authentication with respect to a second electronic device that requests authentication through a first communication mode;
transmitting, when the second electronic device is authenticated, first information used for controlling the first electronic device to the second electronic device through the first communication mode; and
transferring second information indicating that the second electronic device is authenticated, to a second authentication unit in the first electronic device, wherein the second authentication unit, performs authentication through a second communication mode.

12. The method of claim 11, wherein the transmitting of the first information to the second electronic device comprises:
transmitting at least one of an authority and a security key in association with the first information to the second electronic device through the first communication mode.

13. The method of claim 11, wherein the transferring of the second information comprises:
further transferring at least one of an authority and a security key in association with the second information to the second authentication unit; and
controlling the second authentication unit to ascertain the second information by using at least one of the authority and the security key in association with the second information in a secure area that is virtually set in the first electronic device.

14. The method of claim 11, further comprising:
determining whether the second electronic device is authenticated based on the second information when a control signal is received from the second electronic device through the second communication mode; and
performing communication with the second electronic device through the second communication mode when it is determined that the second electronic is authenticated.

15. A second electronic device that performs authentication, the second electronic device comprising:
a first authentication unit configured to request authentication with respect to the second electronic device through a first communication mode; and
a second authentication unit configured to request authentication through a second communication mode,
wherein the first authentication unit is further configured to:
receive first information used for controlling the first electronic device from the first electronic device through the first communication mode when the second electronic device is authenticated, and
transfer second information indicating that the second electronic device is authenticated to the second authentication unit.
